(19) Europäisches Patentamt
European Patent Office
Office européen des brevets

(11) EP 3 334 846 B1

(12) **FASCICULE DE BREVET EUROPEEN**

(45) Date de publication et mention de la délivrance du brevet:
**14.10.2020 Bulletin 2020/42**

(21) Numéro de dépôt: **16750818.3**

(22) Date de dépôt: **10.08.2016**

(51) Int Cl.:
***C22B 3/26*** *(2006.01)* ***C22B 34/24*** *(2006.01)*

(86) Numéro de dépôt international:
**PCT/EP2016/068998**

(87) Numéro de publication internationale:
**WO 2017/025547 (16.02.2017 Gazette 2017/07)**

(54) **PROCÉDÉS D'EXTRACTION ET DE RÉCUPÉRATION DU TANTALE PRÉSENT DANS UNE PHASE AQUEUSE ACIDE AU MOYEN D'UN LIQUIDE IONIQUE, ET UTILISATION D'UN TEL LIQUIDE IONIQUE POUR EXTRAIRE LE TANTALE D'UNE PHASE AQUEUSE ACIDE**

VERFAHREN ZUR EXTRAKTION UND WIEDERGEWINNUNG VON TANTAL IN EINER WÄSSRIGEN PHASE MITTELS EINER IONISCHEN FLÜSSIGKEIT UND VERWENDUNG SOLCH EINER IONISCHEN FLÜSSIGKEIT ZUR EXTRAKTION DES TANTALS AUS EINER SAUREN WÄSSRIGEN PHASE

PROCESSES FOR EXTRACTING AND RECOVERING TANTALUM PRESENT IN AN ACID AQUEOUS PHASE BY MEANS OF AN IONIC LIQUID, AND USE OF SUCH AN IONIC LIQUID FOR EXTRACTING THE TANTALUM FROM AN ACID AQUEOUS PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2015 FR 1557636**

(43) Date de publication de la demande:
**20.06.2018 Bulletin 2018/25**

(73) Titulaires:
- **Centre National de la Recherche Scientifique 75794 Paris Cedex 16 (FR)**
- **Université de Montpellier 34090 Montpellier (FR)**
- **Université de Chambéry 73000 Chambéry (FR)**
- **Ecole Nationale Supérieure de Chimie de Montpellier 34296 Montpellier Cedex 5 (FR)**
- **TND 59890 Quesnoy sur Deûle (FR)**
- **Université de Lorraine 54000 Nancy (FR)**

(72) Inventeurs:
- **TURGIS, Raphaël 30200 Sabran (FR)**
- **ARRACHART, Guilhem 30126 Saint-Laurent-des-Arbres (FR)**
- **PELLET-ROSTAING, Stéphane 69100 Villeurbanne (FR)**
- **DRAYE, Micheline 73000 Chambery (FR)**
- **LEGEAI, Sophie 57000 Metz (FR)**
- **VIRIEUX, David 34000 Montpellier (FR)**
- **THOMAS, Christian 75011 Paris (FR)**

(74) Mandataire: **Brevalex 95, rue d'Amsterdam 75378 Paris Cedex 8 (FR)**

(56) Documents cités:
**US-A1- 2004 213 716**

- **TIAN G C ET AL: "Application of ionic liquids in hydrometallurgy of nonferrous metals", TRANSACTIONS OF NONFERROUS METALS SOCIETY OF CHINA, NONFERROUS METALS SOCIETY OF CHINA, CN, vol. 20, no. 3, 1 mars 2010 (2010-03-01), pages 513-520, XP026990006, ISSN: 1003-6326 [extrait le 2010-03-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

• GUOR-TZO WEI ET AL: "Room temperature ionic liquid as a novel medium for liquid/liquid extraction of metal ions", ANALYTICA CHIMICA ACTA, ELSEVIER, AMSTERDAM, NL, vol. 488, 25 juillet 2003 (2003-07-25), pages 183-192, XP002553482, ISSN: 0003-2670, DOI: 10.1016/S0003-2670(03)00660-3 [extrait le 2003-07-04]

## Description

### DOMAINE TECHNIQUE

La présente invention se rapporte au domaine de l'extraction du tantale d'une phase aqueuse acide dans laquelle ce tantale est présent.

Elle se rapporte plus particulièrement à un procédé d'extraction du tantale d'une phase aqueuse acide, ce procédé d'extraction comprenant la mise en contact de cette phase aqueuse avec une phase non miscible à l'eau.

L'invention se rapporte également à un procédé de récupération du tantale présent dans une phase aqueuse acide qui met en œuvre le procédé d'extraction qui vient d'être mentionné.

La présente invention se rapporte encore à l'utilisation d'un extractant particulier, pour extraire le tantale d'une phase aqueuse acide dans laquelle il est présent.

La phase aqueuse acide dont peut être extrait, ou à partir de laquelle peut être récupéré, le tantale peut notamment être une solution d'attaque acide d'un concentré de minerais ou de déchets comprenant ledit tantale.

La présente invention trouve notamment application dans le traitement de minerais naturels et/ou de déchets industriels, tels que des déchets d'équipement électriques et électroniques, en vue de valoriser le tantale présent dans ces derniers.

### ÉTAT DE LA TECHNIQUE ANTÉRIEURE

Le tantale, de symbole Ta, est un métal de transition qui présente un point de fusion élevé, une très grande résistance à la corrosion des acides ainsi que de bonnes propriétés de conduction électrique et de conduction thermique. Le tantale est, à ce jour, utilisé dans de nombreux domaines et, notamment, dans l'industrie chimique, l'aéronautique, le médical, l'électronique et, plus particulièrement, pour la fabrication de condensateurs.

La principale source de tantale provient actuellement de minerais, en particulier de la colombo-tantalite dans laquelle cet élément chimique est associé au niobium. Le reste de la production de tantale provient du traitement de scories d'étain ainsi que du recyclage de déchets industriels.

Les procédés actuellement utilisés pour récupérer le tantale à partir de ces minerais naturels ou industriels consistent à soumettre ces minerais, préalablement broyés, à des traitements chimiques pour obtenir un concentré minéral, lequel est alors soumis à une attaque chimique classiquement réalisée au moyen d'un ou de plusieurs acides inorganiques. La solution dite "solution d'attaque acide" ainsi obtenue est alors soumise à un traitement hydro-métallurgique basé sur la technique d'extraction liquide-liquide, qui consiste à mettre en contact la phase aqueuse constituée par cette solution d'attaque acide avec une phase organique comprenant un ou plusieurs extractants, pour obtenir l'extraction de ce tantale.

De nombreux extractants ont été développés pour extraire le tantale d'une telle phase aqueuse acide. À titre d'exemples, on peut citer les dérivés phosphorés tels que le phosphate de tri-*n*-butyle (ou TBP) et l'oxyde de trioctylphosphine (ou TOPO), les amines grasses, les sulfoxides, les alcools gras tels que l'octan-2-ol, et les cétones telles que la cyclohexanone ou encore la méthylisobutylcétone (ou MIBK) comme décrit dans le document US 2004/213716 A1, ces extractants étant, le cas échéant, en solution dans un solvant ou diluant organique.

La MIBK, le TBP, la cyclohexanone et l'octan-2-ol font partie des extractants qui sont utilisés industriellement pour extraire le tantale d'une phase aqueuse acide, étant précisé que la MIBK reste l'extractant le plus utilisé à ce jour.

Néanmoins, la MIBK, qui présente une forte volatilité et un point d'éclair (ou point d'inflammabilité) de 14°C, est très inflammable, ce qui pose des problèmes de sécurité industrielle mais également de sécurité environnementale.

Pour satisfaire des besoins en tantale en perpétuelle augmentation, en recourant notamment à la valorisation des déchets industriels et domestiques contenant ce métal, il serait souhaitable de disposer d'un extractant qui, tout en ayant une aptitude remarquable à extraire le tantale d'une phase aqueuse acide, soit d'une manière générale exempt des inconvénients présentés par les extractants utilisés à ce jour.

Les Inventeurs se sont donc fixé pour but de proposer un procédé permettant d'extraire le tantale présent dans une phase aqueuse acide, avec un rendement et une sélectivité, vis-à-vis des autres métaux et impuretés également présents dans cette phase aqueuse acide, qui soient remarquables et ce, dans des conditions de sécurité industrielle et de sécurité environnementale optimisées.

### EXPOSÉ DE L'INVENTION

Ce but précédemment énoncé ainsi que d'autres sont atteints, en premier lieu, par un procédé d'extraction du tantale d'une phase aqueuse A1 acide du type précité, c'est-à-dire par un procédé comprenant au moins une étape comprenant la mise en contact de la phase aqueuse A1 avec une phase A2 non miscible à l'eau, puis la séparation de la phase aqueuse A1 de la phase A2.

Selon l'invention, la phase A2 est constituée par un liquide ionique ou un mélange de liquides ioniques en tant qu'extractant.

Comme clairement établi par la littérature scientifique, un liquide ionique est un sel possédant une température de fusion inférieure à 100 °C et souvent même inférieure à la température ambiante. Un liquide ionique est typiquement constitué d'un cation organique et d'un anion qui peut être organique ou inorganique.

Les liquides ioniques se caractérisant par une grande stabilité thermique, par une tension de vapeur quasi nulle (ce qui leur interdit toute évaporation dans l'atmosphère) ainsi que par une très faible inflammabilité, ils sont employés comme substituts aux solvants organiques traditionnels qui sont couramment mis en œuvre dans les réactions chimiques.

Or, les Inventeurs ont constaté, de manière inattendue et surprenante, qu'une phase A2 constituée par un liquide ionique, ou par un mélange de liquides ioniques, permet d'extraire, de manière performante et sélective, le tantale présent dans une phase aqueuse acide. Ainsi, le liquide ionique ou le mélange de liquides ioniques assure non seulement la fonction de solvant ou diluant organique mais également celle d'extractant.

Lorsque l'on indique que cette phase A2 peut être constituée par un liquide ionique ou par un mélange de liquides ioniques, on entend que cette phase A2 ne comprend aucun autre solvant ou diluant organique, ce qui permet d'optimiser les conditions de sécurité industrielle et de sécurité environnementale ainsi que de simplifier la gestion du procédé d'extraction, en limitant le nombre de composés mis en œuvre.

Dans une variante avantageuse de l'invention, la phase A2 est constituée par un liquide ionique, c'est-à-dire que cette phase A2 n'est constituée que par un seul liquide ionique.

Mais rien n'interdit d'envisager que cette phase A2 soit constituée par un mélange de deux, trois, voire plus, liquides ioniques.

Par définition, le liquide ionique ou les liquides ioniques qui constituent le mélange comprennent un cation organique et un anion. Du point de vue de la nomenclature, le cation est noté entre crochets et indiqué en premier.

Dans une variante avantageuse de l'invention, l'anion du ou des liquides ioniques est un anion organique, avantageusement choisi parmi le *bis*-(trifluorométhanesulfonyl)imide, symbolisé par "$NTf_2$", l'hexafluorophosphate, noté "$PF_6$", et le *bis*-(fluorosulfonyl)imide, noté "$N(SO_2F)_2$" ou "FSI".

Dans une variante préférentielle de l'invention, l'anion organique est le *bis*-(trifluorométhanesulfonyl)imide $NTf_2$.

Dans une variante avantageuse de l'invention, le cation organique du ou des liquides ioniques comprend un groupement azoté choisi dans le groupe constitué par un ammonium quaternaire, cyclique ou non cyclique, un phosphonium, un pipéridinium, un pyridinium, un pyrrolidinium, un pipérazinium et un imidazolium, étant précisé que ces groupements azotés sont respectivement symbolisés par "A", "P", "Pip", "Py", "Pyr", "Piperaz" et "IM".

L'ammonium quaternaire peut notamment être un tétraalkylammonium.

Dans une variante plus avantageuse encore de l'invention, le cation organique du ou des liquides ioniques comprend un groupement azoté choisi dans le groupe constitué par un pipéridinium, un pyridinium, un pyrrolidinium, un pipérazinium et un imidazolium.

Dans une première version plus particulièrement avantageuse de l'invention, ce cation organique est choisi dans le groupe constitué par un dialkylpipéridinium, un alkylpyridinium, un *N,N'*-dialkylpipérazinium et un *N,N'*-dialkylimidazolium. Dans la suite de la présente demande, un liquide ionique comprenant un tel cation organique comprenant ce ou ces groupes alkyle est appelé "liquide ionique non fonctionnalisé".

Ce ou ces groupes alkyle, avantageusement en $C_1$ à $C_{10}$, peuvent être linéaires ou ramifiés. Ils sont symbolisés par la première lettre du ou des groupes alkyles portés par le cation, à gauche du symbole dudit cation.

À titre d'exemples de liquides ioniques non fonctionnalisés, lorsque l'anion est le *bis*-(trifluorométhanesulfonyl)imide $NTf_2$, on peut citer les liquides ioniques suivants :

- le *bis*-(trifluorométhanesulfonyl)imide d'éthylbutylpipéridinium, symbolisé par [EBPip]$NTf_2$, de formule :

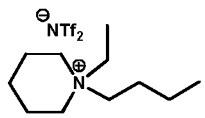

- le *bis*-(trifluorométhanesulfonyl)imide de *N*-butyl-*N*-méthylimidazolium, symbolisé par [BMIM]$NTf_2$, de formule :

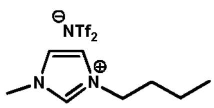

Dans une deuxième version plus particulièrement avantageuse de l'invention, ce cation organique peut, en outre, comprendre au moins un groupement fonctionnel choisi parmi une cétone, un alcool, un phosphonate et un oxyde de phosphine. Dans la suite de la présente demande, un liquide ionique comprenant un tel cation organique comprenant ce ou ces groupements fonctionnels est appelé "liquide ionique fonctionnalisé".

Un liquide ionique fonctionnalisé peut également comprendre un ou plusieurs groupes tels qu'un groupe alkyle, linéaire ou ramifié, ou un groupe aromatique, éventuellement substitué.

**[0034]** * Des liquides ioniques comprenant une fonction cétone, c'est-à-dire des liquides ioniques dont le cation organique comprend une fonction cétone, peuvent être synthétisés selon différentes voies, telles que les voies A, B et C explicitées ci-après.

Voie A

Selon la voie A, la synthèse de tels liquides ioniques peut mettre en œuvre la réaction (1) suivante :

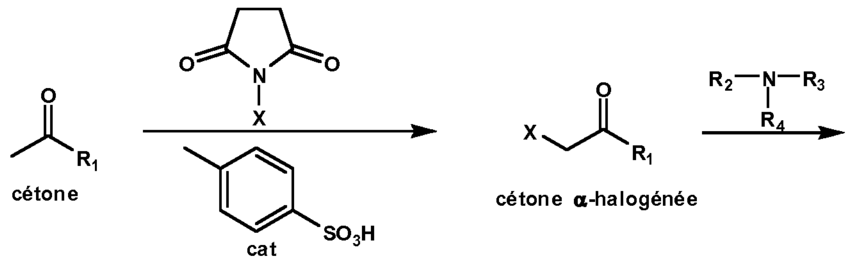

cétone

cétone α-halogénée

Composé I

(1)

Pour l'obtention du liquide ionique mis en œuvre dans le cadre de la présente invention, l'anion halogénure $X^-$ du Composé I est échangé par l'anion $NTf_2^-$ selon la réaction (1') suivante :

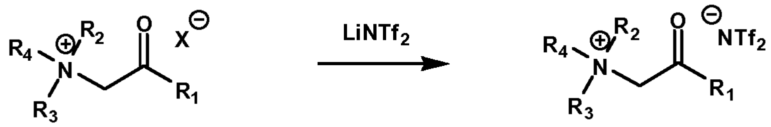

(1')

Composé I

Composé LI

Dans les composés dans les réactions (1) et (1') ci-dessus, Ri peut notamment être un groupe alkyle, linéaire ou ramifié, un groupe aromatique, éventuellement substitué. À titre d'exemples, Ri peut être un groupe n-alkyle, un groupe isobutyle, un groupe tertiobutyle, un groupe phényle ou encore un groupe tolyle.

Voie B

La synthèse de liquides ioniques selon la voie B est illustrée par celle du *bis*-(trifluorométhanesulfonyl)imide de 1-éthyl-4-oxopentyl-pipéridinium, $[EPipP4K]NTf_2$, à partir de l'acétylbutyrolactone qui met en œuvre les réactions (2) et (2') successives suivantes :

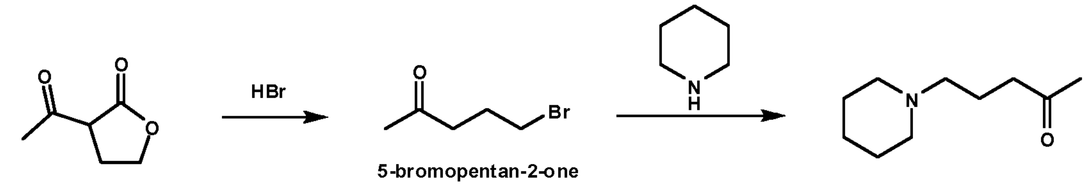


acétylbutyrolactone

5-bromopentan-2-one

5-(pipéridinyl)pentan-2-one

(2)

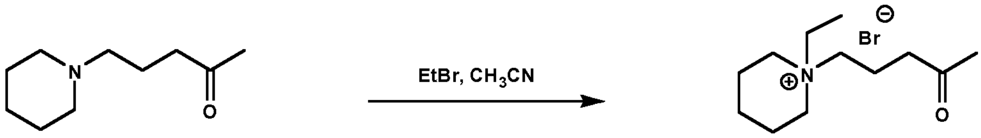


5-(pipéridinyl)pentan-2-one

bromure de 1-éthyl-4-oxopentyl-pipéridinium
[EPipP4K]Br

(2')

Pour l'obtention du liquide ionique mis en œuvre dans le cadre de la présente invention, l'anion bromure $Br^-$ échangé par l'anion $NTf_2^-$ selon la réaction (2") suivante :

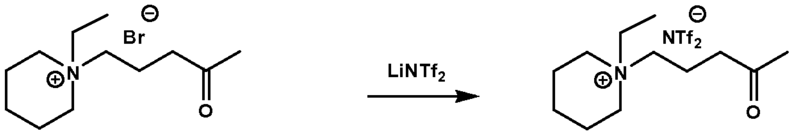


[EPipP4K]Br

[EPipP4K]$NTf_2$

(2")

Voie C

Selon la voie C, un liquide ionique comprenant une fonction cétone peut être synthétisé selon la réaction (3) suivante :

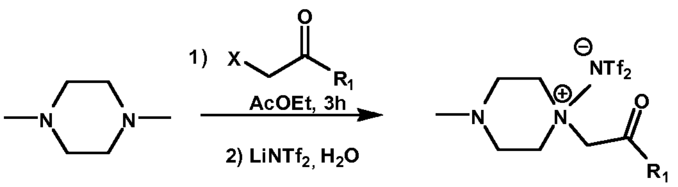


(3)

À titre d'exemples de liquides ioniques fonctionnalisés comprenant une fonction cétone et l'anion $NTf_2^-$, on peut citer les liquides ioniques suivants :

- le *bis*-(trifluorométhanesulfonyl)imide de *N*-éthyl-*N*-(4-méthyl-2-oxopentyl)-pipéridinium, [EPipMIBK]$NTf_2$, de formule

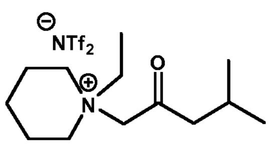

[EPipMIBK]$NTf_2$

- le *bis*-(trifluorométhanesulfonyl)imide de *N*-éthyl-*N*-acétophénone pipéridinium, [EPipAcP]$NTf_2$, de formule

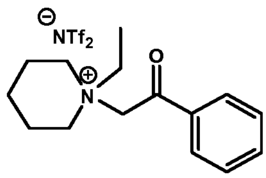

[EPipAcP]NTf$_2$

- le *bis*-(trifluorométhanesulfonyl)imide de *N*-éthyl-*N*-4'-méthylacétophénone pipéridinium, [EPipMAcP]NTf$_2$, de formule

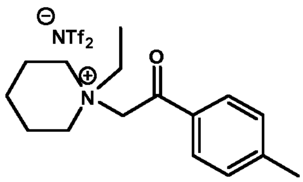

[EPipMAcP]NTf$_2$

- le *bis*-(trifluorométhanesulfonyl)imide de *N*-méthyl-*N*-(4-méthyl-2-oxopentyl)imidazolium, [MIMMIBK]NTf$_2$, de formule

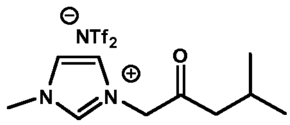

[MIMMIBK]NTf$_2$

- le *bis*-(trifluorométhanesulfonyl)imide de *N*-(4-méthyl-2-oxopentyl)pyridinium, [PyMIBK]NTf$_2$, de formule

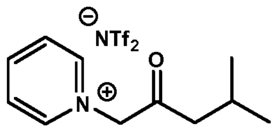

[PyMIBK]NTf$_2$

- le *bis*-(trifluorométhanesulfonyl)imide de *N*-éthyl-*N*-pinacolone pipéridinium, [EPipPin]NTf$_2$, de formule

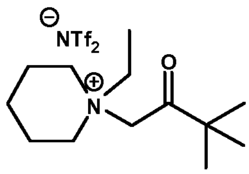

[EPipPin]NTf$_2$

- le *bis*-(trifluorométhanesulfonyl)imide de *N*-méthyl-*N*-pinacolone-imidazolium, [MIMPin]NTf$_2$, de formule

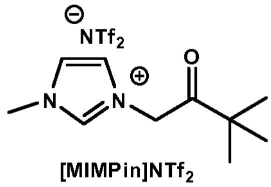

[MIMPin]$NTf_2$

- le *bis*-(trifluorométhanesulfonyl)imide de 1-éthyl-4-oxopentyl-pipéridinium, [EPipP4K]$NTF_2$, de formule

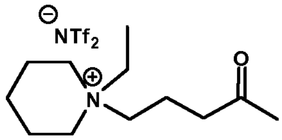

- le *bis*-(trifluorométhanesulfonyl)imide de *N,N*-1,4-diméthyl-*N*-(4-méthyl-2-oxopentyl)pipérazinium, [MMPiperazMIBK]$NTf_2$, de formule

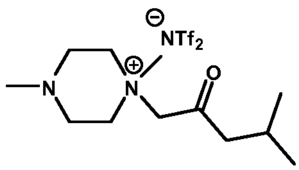

**[0042]** * Des liquides ioniques comprenant une fonction alcool, c'est-à-dire des liquides ioniques dont le cation organique comprend une fonction alcool, peuvent être synthétisés selon la réaction (4) suivante :

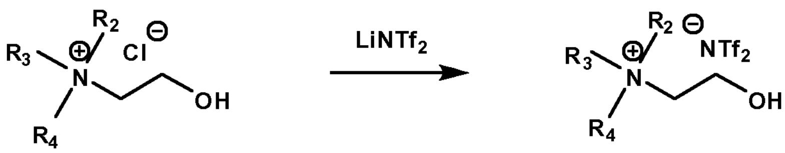


(4)

À titre d'exemple de liquide ionique fonctionnalisé comprenant une fonction alcool et l'anion $NTf_2^-$, on peut citer le liquide ionique suivant :

- le *bis*-(trifluorométhanesulfonyl)imide de choline, [Chol]$NTf_2$, de formule

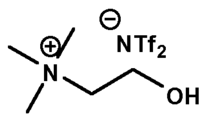

* Des liquides ioniques comprenant une fonction oxyde de phosphine, c'est-à-dire des liquides ioniques dont le cation organique comprend une fonction oxyde de phosphine, peuvent être synthétisés selon la réaction (5) suivante :

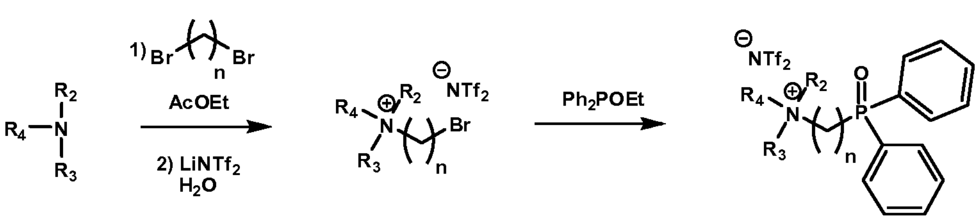


(5)

* Des liquides ioniques comprenant une fonction phosphonate, c'est-à-dire des liquides ioniques dont le cation

organique comprend une fonction phosphonate, peuvent être synthétisés selon la réaction (6) suivante :

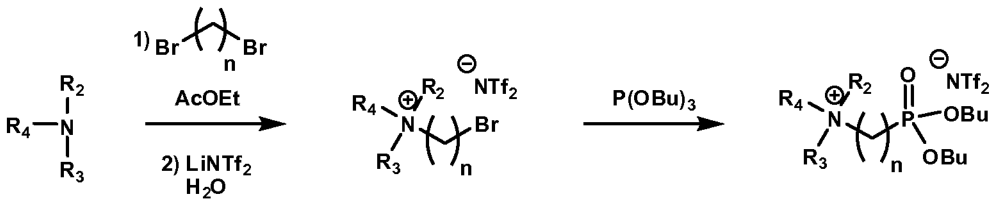


(6)

À titre d'exemple de liquide ionique fonctionnalisé comprenant une fonction phosphonate et l'anion $NTf_2^-$, on peut citer le liquide ionique suivant :

- le *bis*-(trifluorométhanesulfonyl)imide de *N*-(4-(dibutoxyphosphoryl)butyl)-*N*-éthylpipéridinium, [EPipBPhos]$NTf_2$, de formule

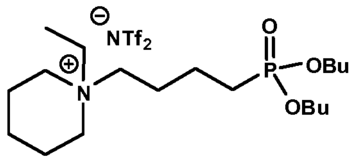

[EPipBPhos]$NTf_2$

Comme déjà précisé dans cette deuxième version plus particulièrement avantageuse de l'invention, le cation organique peut comprendre au moins un groupement fonctionnel choisi parmi une cétone, un alcool, un phosphonate et un oxyde de phosphine. Ainsi, ce cation organique peut ne comprendre qu'un groupement fonctionnel, ce qui le cas de l'ensemble des liquides ioniques décrits ci-dessus.
Il y a lieu de noter que parmi les groupements fonctionnels mentionnés, le groupement fonctionnel phosphonate est plus particulièrement préféré.
Toutefois, rien n'interdit que ce cation organique et, par conséquent, le que le liquide ionique fonctionnalisé correspondant, comprennent deux, voire plus, groupements fonctionnels.
Parmi les liquides ioniques envisageables pour la mise en œuvre du procédé d'extraction selon l'invention, les liquides ioniques suivants sont plus particulièrement préférés, compte tenu de leurs performances, tant en termes de rendements d'extraction du tantale puis de désextraction, mais également en termes de sélectivité vis-à-vis des autres métaux présents dans la phase aqueuse acide dont ce tantale est extrait :

- le *bis*-(trifluorométhanesulfonyl)imide de *N*-éthyl-*N*-(4-méthyl-2-oxopentyl)pipéridinium,
- le *bis*-(trifluorométhanesulfonyl)imide de *N*-méthyl-*N*-(4-méthyl-2-oxopentyl)imidazolium,
- le *bis*-(trifluorométhanesulfonyl)imide de *N*-(4-méthyl-2-oxopentyl)pyridinium,
- le *bis*-(trifluorométhanesulfonyl)imide de (4-(dibutoxyphosphoryl)-butyl)éthylpipéridinium,
- le *bis*-(trifluorométhanesulfonyl)imide d'éthylbutylpipéridinium, et
- le *bis*-(trifluorométhanesulfonyl)imide de méthylimidazolium.

De surcroît, et de manière avantageuse, le procédé d'extraction selon l'invention, peut être mis en œuvre à température n'excédant pas 80 °C et étant, avantageusement, comprise entre 18 °C et 40 °C. Ainsi, aux avantages déjà mentionnés pour le procédé d'extraction selon l'invention, s'ajoute celui d'une limitation des coûts énergétiques liés à sa mise en œuvre.
Selon une variante avantageuse du procédé d'extraction selon l'invention, la phase aqueuse A1 est une solution d'attaque acide, typiquement par un ou plusieurs acides inorganiques, d'un concentré d'un minerai naturel, ou d'un minerai urbain, comprenant ledit tantale. Par "minerai urbain", on entend la source de tantale pouvant notamment provenir du recyclage de déchets industriels et domestiques tels que des déchets d'équipements électriques et électroniques, encore appelés "DEEE" ou "D3E".
Selon une autre variante avantageuse de l'invention, la phase aqueuse A1 comprend au moins un acide inorganique choisi dans le groupe constitué par l'acide fluorhydrique, l'acide sulfurique, l'acide nitrique, l'acide phosphorique et l'acide chlorhydrique.
Selon une variante préférée, la phase aqueuse A1 comprend au moins l'acide sulfurique.
Selon une autre variante avantageuse de l'invention, cette phase aqueuse A1 présente une concentration

molaire totale en acide(s) inorganique(s) d'au moins 0,1 mol/L, allant avantageusement de 1 mol/L à 14 mol/L et, préférentiellement, de 3 mol/L à 9 mol/L.

La présente invention se rapporte, en deuxième lieu, à un procédé de récupération du tantale présent dans une phase aqueuse A1 acide.

Selon l'invention, ce procédé de récupération comprend les étapes suivantes :

(a) l'extraction du tantale de la phase aqueuse A1 par un procédé d'extraction tel que défini ci-dessus ; et
(b) la désextraction dudit tantale présent dans la phase A2 telle qu'obtenue à l'issue de l'étape (a), ou
(b') l'électrodéposition dudit tantale présent dans la phase A2 telle qu'obtenue à l'issue de l'étape (a).

En d'autres termes, le procédé de récupération selon l'invention comprend les étapes suivantes :

(a) l'extraction du tantale de la phase aqueuse A1 par la mise en contact de la phase aqueuse A1 avec une phase A2 non miscible à l'eau et constituée par un liquide ionique ou un mélange de liquides ioniques en tant qu'extractant, puis la séparation de la phase aqueuse A1 de la phase A2, et
(b) la désextraction dudit tantale présent dans la phase A2 telle qu'obtenue à l'issue de l'étape (a), ou
(b') l'électrodéposition dudit tantale présent dans la phase A2 telle qu'obtenue à l'issue de l'étape (a).

Dans ce procédé de récupération selon l'invention, l'étape (a) d'extraction est réalisée par le procédé d'extraction tel que défini ci-avant, étant précisé que les caractéristiques avantageuses de ce procédé d'extraction, telles que celles relatives aux compositions des phase A2 et phase aqueuse A1 acide, peuvent être prises seules ou en combinaison.

Les Inventeurs ont également mis en évidence le fait que tant l'étape (b) de désextraction du tantale que l'étape (b') d'électrodéposition du tantale sont particulièrement performantes et permettent de récupérer quantitativement le tantale préalablement extrait de la phase aqueuse A1.

Dans une variante avantageuse du procédé de récupération selon l'invention, l'étape (b) de désextraction comprend la mise en contact de cette phase A2 avec une phase aqueuse A3 dont le pH est inférieur ou égal à 7, puis la séparation de la phase A2 de la phase aqueuse A3.

La phase aqueuse A3 peut, en plus de l'eau, comprendre un acide, organique ou inorganique, par exemple dans des concentrations molaires allant de 0,001 M à 0,1 M.

Dans une variante avantageuse du procédé de récupération selon l'invention, la phase aqueuse A3 présente un pH allant de 1 à 7, de préférence un pH de 7.

L'acide organique peut, par exemple, être l'acide éthylène diamine tétraacétique (EDTA). L'acide inorganique peut, par exemple, être l'acide sulfurique. La phase aqueuse A3 peut également être formée par une solution d'oxalate d'ammonium.

Dans une variante préférentielle du procédé de récupération selon l'invention, la phase aqueuse A3 n'est constituée que par de l'eau, qui peut être de l'eau distillé, de l'eau permutée ou encore de l'eau déionisée.

Dans une variante avantageuse du procédé de récupération selon l'invention, l'étape (b') d'électrodéposition comprend l'application d'une différence de potentiel entre une cathode et une électrode de référence, en présence d'une électrode de travail, l'ensemble de ces électrodes étant disposé dans la phase A2 telle qu'obtenue à l'issue de l'étape (a), cette phase A2 constituant donc une solution électrolytique. On observe alors le dépôt, à la cathode, de tantale sous sa forme métallique, ce dépôt résultant de la réduction du tantale présent dans cette solution électrolytique ou phase A2.

L'électrode de référence peut être de type Ag(I)/Ag(0), alors constituée par un fil d'argent immergé dans une solution contenant un sel d'Ag(I), tandis que l'électrode de travail peut être formée par un substrat en aluminium, en titane, en carbone, en nickel, en cuivre, en fer, en acier inoxydable ou en zinc et, avantageusement, en aluminium, en titane et en carbone.

Dans une variante avantageuse du procédé de récupération selon l'invention, la différence de potentiel appliquée entre la cathode et l'électrode de référence Ag(I)/Ag(0) est comprise entre - 0,8 V et - 2,4 V, avantageusement entre -1,4 V et -2,1 V et, préférentiellement, entre -1,4 V et - 1,6 V.

La température de la solution électrolytique ou phase A2 est avantageusement comprise entre 60 °C et 120 °C.

La phase A2, telle qu'obtenue à l'issue de l'étape (b) de désextraction ou à l'issue de l'étape (b') d'électrodéposition, peut alors être avantageusement recyclée pour être à nouveau mise en œuvre dans le cadre d'une étape (a) d'extraction, comme phase A2 non miscible à l'eau.

La présente invention se rapporte, en troisième lieu, à une utilisation d'un extractant particulier pour extraire le tantale d'une phase aqueuse A1 acide.

Selon l'invention, cet extractant particulier dont l'utilisation fait l'objet de la présente invention est un liquide ionique ou un mélange de liquides ioniques, ledit ou lesdits liquides ioniques comprenant un cation organique et un anion, ledit cation organique comprenant un groupement azoté tel que défini ci-dessus et choisi dans le groupe constitué par un pipéridinium, un pyridinium, un pyrrolidinium, un pipérazinium et un imidazolium.

Dans une variante avantageuse de l'invention, l'anion du ou des liquides ioniques est un anion organique, avantageusement choisi parmi le *bis*-(trifluorométhanesulfonyl)imide, l'hexafluorophosphate et le bis(fluorosulfonyl)imide.

Dans une variante préférentielle de l'invention, l'anion organique est le *bis*-(trifluorométhanesulfonyl)imide.

Dans une première version de l'utilisation selon l'invention, ce liquide ionique est un liquide ionique non fonctionnalisé, c'est-à-dire un liquide ionique dont le cation organique est choisi dans le groupe constitué par un dialkylpipéridinium, un alkylpyridinium, un *N,N'*-dialkylpipérazinium et un *N,N'*-dialkylimidazolium. On se reportera à ce qui a été précédemment décrit pour des variantes avantageuses ainsi que des exemples de liquides ioniques non fonctionnalisés susceptibles d'être utilisés dans le cadre de la présente invention.

Dans une deuxième version de l'utilisation selon l'invention, ce liquide ionique est un liquide ionique fonctionnalisé, c'est-à-dire un liquide ionique dont le cation organique comprend, en outre, au moins un groupement fonctionnel choisi parmi une cétone, un alcool, un phosphonate et un oxyde de phosphine. On se reportera à ce qui a été précédemment décrit pour des variantes avantageuses ainsi que des exemples de liquides ioniques fonctionnalisés susceptibles d'être utilisés dans le cadre de la présente invention.

Selon une variante avantageuse de l'invention, l'extraction est réalisée par la technique d'extraction liquide-liquide, technique qui consiste à mettre en contact la phase aqueuse A1 acide comprenant le tantale, avec une phase qui comprend ce liquide ionique ou le mélange de tels liquides ioniques, cette phase pouvant éventuellement comprendre, en outre, d'autres composés tels qu'un ou plusieurs solvants ou diluants organiques.

Selon une variante préférée de l'invention, l'extraction est réalisée par la mise en contact de la phase aqueuse A1 acide comprenant le tantale, avec une phase A2 qui n'est constituée que d'un liquide ionique, seul, ou par le mélange de tels liquides ioniques et ce, en l'absence de tout autre solvant ou diluant organique.

Dans le cadre de la présente invention, on entend par "mélange de liquides ioniques", le mélange de deux, trois, voire plus, liquides ioniques qui peuvent être fonctionnalisés et/ou non fonctionnalisés.

D'autres caractéristiques et avantages de l'invention apparaîtront mieux à la lecture des exemples qui suivent et qui se rapportent à la synthèse de liquides ioniques ainsi qu'à des essais qui mettent en évidence l'aptitude de ces liquides ioniques à extraire le tantale de solutions aqueuses acides dans lesquelles ce tantale est présent.

Il est précisé que ces exemples, qui sont notamment décrits en relation avec les figures 1 à 15B annexées, ne sont donnés qu'à titre d'illustration des objets de l'invention et ne constituent en aucun cas une limitation de ces objets.

## BRÈVE DESCRIPTION DES DESSINS

La figure 1 illustre l'influence de la concentration molaire en acide sulfurique d'une phase aqueuse A1 comprenant Ta sur le coefficient de distribution de ce Ta (noté $D_{Ta}$) lorsque ce Ta est extrait de ladite phase aqueuse A1 au moyen d'une phase A2 constituée de [EPipMIBK]$NTf_2$.

La figure 2 illustre l'influence de la concentration molaire en acide sulfurique d'une phase aqueuse A1 comprenant Ta, Nb et Eu sur les pourcentages d'extraction de ces métaux (notés $E_M$) lorsque ces métaux sont extraits de cette phase aqueuse au moyen d'une phase A2 constituée de [EPipMIBK]$NTf_2$.

La figure 3 illustre l'influence de la concentration molaire en acide sulfurique d'une phase aqueuse A1 comprenant Ta, Nb, Fe, Ni, Mn et Ag sur le coefficient de distribution de chacun de ces métaux M (noté $D_M$) lorsque l'extraction est réalisée par une phase A2 constituée de [EPipMIBK]$NTf_2$.

La figure 4 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$) lorsque l'extraction est réalisée par une phase A2 constituée de [EPipMIBK]$NTf_2$.

La figure 5 illustre l'influence de la concentration molaire en acide sulfurique d'une phase aqueuse A1 comprenant Ta, Nb, Fe, Ni, Mn et Ag sur le coefficient de distribution de chacun de ces métaux M (noté $D_M$), après 3 cycles d'extraction-désextraction par une phase A2 initiale constituée de [EPipMIBK]$NTf_2$.

La figure 6 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$), après 3 cycles d'extraction-désextraction par une phase A2 initiale constituée de [EPipMIBK]$NTf_2$.

La figure 7 illustre l'influence de la concentration molaire en acide sulfurique d'une phase aqueuse A1 comprenant Ta, Nb, Fe, Ni, Mn et Ag sur le coefficient de distribution de chacun de ces métaux M (noté $D_M$) lorsque l'extraction est réalisée par une phase A2 constituée de [EBPip]$NTf_2$.

La figure 8 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$) lorsque l'extraction est réalisée par une phase A2 constituée de [EBPip]$NTf_2$.

La figure 9 illustre l'influence de la concentration molaire en acide sulfurique d'une phase aqueuse A1 comprenant

Ta, Nb, Fe, Ni, Mn et Ag sur le coefficient de distribution de chacun de ces métaux M (noté $D_M$), après 3 cycles d'extraction-désextraction par une phase A2 initiale constituée de [EBPip]$NTf_2$.

La figure 10 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$), après 3 cycles d'extraction-désextraction par une phase A2 initiale constituée de [EBPip]$NTf_2$.

La figure 11 illustre l'influence de la concentration molaire en acide sulfurique d'une phase aqueuse A1 comprenant Ta, Nb, Fe, Ni, Mn et Ag sur le coefficient de distribution de chacun de ces métaux M (noté $D_M$) lorsque l'extraction est réalisée par une phase A2 constituée de [EPipBPhos]$NTf_2$.

La figure 12 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$) lorsque l'extraction est réalisée par une phase A2 constituée de [EPipBPhos]$NTf_2$.

La figure 13 illustre l'influence de la concentration molaire en acide sulfurique d'une phase aqueuse A1 comprenant Ta, Nb, Fe, Ni, Mn et Ag sur le coefficient de distribution de chacun de ces métaux M (noté $D_M$), après 3 cycles d'extraction-désextraction par une phase A2 initiale constituée de [EPipBPhos]$NTf_2$.

La figure 14 illustre l'influence de la concentration molaire en acide sulfurique d'une phase aqueuse A1 comprenant Ta, Nb, Fe, Ni, Mn et Ag sur la sélectivité de l'extraction du Ta par rapport à chacun de ces métaux M (notée $S_{Ta/M}$), après 3 cycles d'extraction-désextraction par une phase A2 initiale constituée de [EPipBPhos]$NTf_2$.

La figure 15A correspond à un cliché MEB du dépôt métallique obtenu à la cathode dans l'exemple 8 mis en œuvre avec un substrat en aluminium, tandis que la figure 15B correspond à l'analyse EDX de ce même dépôt.

## EXEMPLES

## SYNTHÈSE DE LIQUIDES IONIQUES

### Exemple 1 : Synthèse de liquides ioniques comprenant une fonction cétone

Comme indiqué précédemment, la synthèse de liquides ioniques comprenant une fonction cétone peut s'effectuer selon la voie A ou la voie B. Quelle que soit la voie A ou B retenue, cette synthèse nécessite celles de composés intermédiaires, ci-après notés "Composés I", comprenant un anion halogénure.

### 1.1 Synthèse des composés intermédiaires

**1.1.1** Selon la voie A

Les réactions mises en œuvre sont les suivantes :

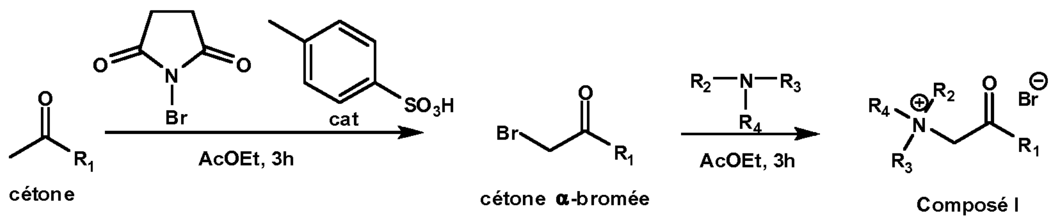


(1bis)

**A.1** Synthèse de cétones α-bromées

Le protocole opératoire suivi pour la synthèse de cétones α-bromées est le suivant : à une solution de 100 mmol de cétone $CH_3C(O)R_1$ et de 10 mmol d'acide paratoluènesulfonique dans 100 mL d'acétate d'éthyle, sont ajoutés, en une fois, 100 mmol de *N*-bromosuccinimide. Le mélange est agité 4 h à température ambiante et à l'abri de la lumière. Le mélange est ensuite filtré, la phase organique lavée par une solution de carbonate de potassium 1 M, de thiosulfate de sodium saturée et à l'eau distillée (2 fois). La phase organique est ensuite séchée sur sulfate de sodium et concentrée sous vide. La cétone α-bromée obtenue se présente sous la forme d'une huile jaune.

Les cétones α-bromées C1 à C3, qui ont été synthétisées conformément au protocole opératoire qui vient d'être décrit, sont précisées dans le Tableau 1 ci-dessous.

Tableau 1

| Cétone α-bromée | Ri | Cétone α-bromée obtenue | Rendement (%) |
|---|---|---|---|
| C1 | $(CH_3)_2CHCH_2$- | 1-bromo-4-méthyl-pentan-2-one (*) | 61 |
| C2 | $C_6H_5$- | 2-bromo-acétophénone | 95 |
| C3 | *p*-$CH_3$-$C_6H_4$- | 2-bromo-4'-méthyl-acétophénone | 95 |

L'astérisque notée (*) dans le Tableau 1 vient préciser que la 1-bromo-4-méthyl-pentan-2-one (cétone C1) est obtenue en mélange avec la 3-bromo-4-méthyl-pentan-2-one, dans un rapport 65/35.

Les données de caractérisation de ces cétones α-bromées C1 à C3 sont les suivantes :

Cétone C1 :1-bromo-4-méthyl-pentan-2-one
***$^1$H NMR*** (400 MHz, $CDCl_3$) δ (ppm): 0,92 (d, 6H, J = 6.7 Hz, C*$H_3$*) ; 2,18 (m, 1H, CH) ; 2,51 (d, 2H, J = 7,0 Hz, C(O)-C*$H_2$*) ; 3,86 (s, 2H, Br-C*$H_2$*-C(O))

Cétone C2 : 2-bromo-acétophénone
***$^1$H NMR*** (400 MHz, $CDCl_3$) δ (ppm): 4,56 (s, 2H, Br-C*$H_2$*-C(O)) ; 7,49 (t, 2H, J = 7.5 Hz, C*$H_{Ar}$*) ; 7,61 (t, 2H, J = 7,5 Hz, C*$H_{Ar}$*) ; 7,98 (d, 2H, J = 7.5 Hz, C*$H_{Ar}$*).

Cétone C3 : 2-bromo-4'-méthyl-acétophénone
***$^1$H NMR*** (400 MHz, $CDCl_3$) δ (ppm): 2,42 (s, 3H, C*$H_3$*) ; 4,43 (s, 2H, Br-C*$H_2$*-C(O)) ; 7,29 (d, 2H, J = 8.0 Hz, C*$H_{Ar}$*) ; 7,88 (d, 2H, J = 8,0 Hz, C*$H_{Ar}$*).

**A.2** Synthèse de Composés I

Le protocole opératoire suivi pour la synthèse de Composés I est décrit en référence à la synthèse du bromure de *N*-éthyl-*N*-(4-méthyl-2-oxopentyl)pipéridinium, noté [EPipMIBK]Br à partir du mélange de 1-bromo-4-méthyl-pentan-2-one (cétone α-bromée C1)et 3-bromo-4-méthyl-pentan-2-one synthétisé au chapitre **A.1** ci-dessus.

À une solution de 1-bromo-4-méthyl-pentan-2-one et de 3-bromo-4-méthyl-pentan-2-one dans un ratio 65/35 (31,45 g de mélange soit 18,87 g correspondant à 105 mmol de cétone α-bromée C1) dans 100 mL d'acétate d'éthyle, sont ajoutés goutte à goutte 17 mL (126 mmol) d'éthylpipéridine. Le mélange est agité à température ambiante pendant 12 h. Le mélange hétérogène est ensuite filtré, les sels sont lavés 2 fois à l'acétate d'éthyle puis le solvant est évaporé sous pression réduite. Le composé [EPipMIBK]Br obtenu, noté I1, se présente sous la forme d'un solide blanc (23,0 g, soit un rendement de 75%).

Les Composés I1 à I5 (synthétisés conformément au protocole opératoire qui vient d'être décrit) ainsi que les Composés I6 et I7 (dont la synthèse est détaillée ci-après) sont précisés dans le Tableau 2 ci-dessous.

Tableau 2

| Composés I | Cétone α-halogénée | Composé azoté | Abréviation du Composé I | Rendement (%) |
|---|---|---|---|---|
| I1 | C1 | éthylpipéridine | [EPipMIBK]Br | 75 |
| I2 | C2 | éthylpipéridine | [EPipAcP]Br | 95 |
| I3 | C3 | éthylpipéridine | [EPipAcMP]Br | 88 |
| I4 | C1 | méthylimidazole | [MIMMIBK]Br | 80 |
| I5 | C1 | pyridine | [PyMIBK]Br | 80 |
| I6 | 1-iodopinacolone | éthylpipéridine | [EPipPin]I | 80 |
| I7 | 1-chloropinacolone | méthylimidazole | [MIMPin]Cl | 80 |

Les formules semi-développées et données de caractérisation de ces Composés I1 à I7 sont les suivantes :

Composé I1 : bromure de *N*-éthyl-*N*-(4-méthyl-2-oxopentyl)pipéridinium, [EPipMIBK]Br, de formule

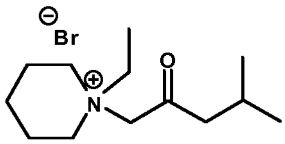

[EPipMIBK]Br

***1H NMR*** (400 MHz, $CDCl_3$) δ (ppm): 0,76 (d, 3H, J = 6.5 Hz, $CH_3$) ; 1,18 (t, 3H, J = 7.5 Hz, $CH_3$-$CH_2$-N) ; 1,61-1,86 (m, 6H, $CH_2$) ; 2,01 (m, 1H, CH) ; 2,39 (d, 2H, J = 7,0 Hz, C(O)-$CH_2$) ; 3,54 (m, 2H, $CH_2$-N) ; 3,71 (q, 2H, J = 7.5 Hz, $CH_3$-$CH_2$-N) ; 3,88 (m, 2H, $CH_2$-N) ; 4,86 (s, 2H, N-$CH_2$-C(O)).
***13C NMR*** (100 MHz, $CDCl_3$) δ (ppm): 8,2 ($CH_3$) ; 19,7 ; 20.6 ($CH_2$) ; 22,3 ($CH_3$) ; 24,0 (CH) ; 49,9 (C(O)-$CH_2$) ; 53,8 ($CH_3$-$CH_2$-N) ; 59,2 ($CH_2$-N) ; 63,1 (N-$CH_2$-C(O)) ; 202,3 (C(O)).

Composé I2 : bromure de *N*-éthyl-*N*-acétophénone pipéridinium, [EPipAcP]Br, de formule

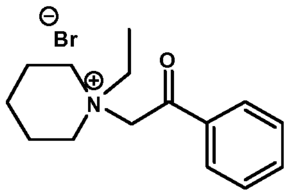

[EPipAcP]Br

***1H NMR*** (400 MHz, $CDCl_3$) δ (ppm): 1,31 (t, 3H, J = 7,5 Hz, $CH_3$-$CH_2$-N) ; 1,79 (m, 2H, $CH_2$) ; 1,91 (m, 4H, $CH_2$) ; 3,83 (dt, 2H, J = 12,5 Hz, J = 4,5 Hz, m, $CH_2$-$CH_2$-N) ; 3,94 (m, 2H, J = 7,5 Hz, $CH_3$-$CH_2$-N) ; 4,38 (m, 2H, $CH_2$-N) ; 5,62 (s, 2H, N-$CH_2$-C(O)) ; 7,44 (t, 2H, J = 7,5 Hz, $CH_{Ar}$) ; 7,57 (t, 1H, J = 7,5 Hz, $CH_{Ar}$) ; 8,19 (d, 2H, J = 7,5 Hz, $CH_{Ar}$).
***13C NMR*** (100 MHz, $CDCl_3$) δ (ppm): 8,4 ($CH_3$) ; 20,1 ; 20,7 ($CH_2$) ; 53,2 ($CH_3$-$CH_2$-N) ; 59,7 ($CH_2$-N) ; 61,6 (N-$CH_2$-C(O)) ; 128,8 ; 129,1 ($CH_{Ar}$) ; 134,1 ($C_{Ar}$) ; 135,0 ($CH_{Ar}$) ; 191,5 (C(O)).

Composé I3 : bromure de *N*-éthyl-*N*-4'-méthylacétophénone pipéridinium, [EPipMAcP]Br, de formule

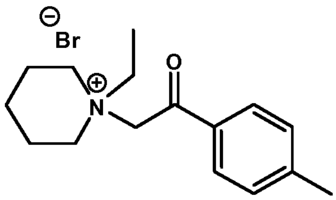

[EPipMAcP]Br

***1H NMR*** (400 MHz, $CDCl_3$) δ (ppm): 1,30 (t, 3H, J = 7,5 Hz, $CH_3$-$CH_2$-N) ; 1,79-1,91 (m, 6H, $CH_2$) ; 2,34 (s, 3H, $CH_3$-Ar) ; 3,81 (dt, 2H, J = 12,5 Hz, J = 4,5 Hz, m, $CH_2$-$CH_2$-N) ; 3,93 (m, 2H, J = 7,5 Hz, $CH_3$-$CH_2$-N) ; 4,38 (m, 2H, $CH_2$-N) ; 5,55 (s, 2H, N-$CH_2$-C(O)) ; 7,23 (d, 2H, J = 8,0 Hz, $CH_{Ar}$) ; 8,07 (d, 2H, J = 8,0 Hz, $CH_{Ar}$).
***13C NMR*** (100 MHz, $CDCl_3$) δ (ppm): 8,4 ($CH_3$) ; 20,1 ; 20,7 ($CH_2$) ; 21,8 ($CH_3$-Ar) ; 53,2 ($CH_3$-$CH_2$-N) ; 59,7 ($CH_2$-N) ; 61,4 (N-$CH_2$-C(O)) ; 128,9 ; 129,8 ($CH_{Ar}$) ; 131,6 ($C_{Ar}$) ; 146,2 ($CH_{Ar}$) ; 190,9 (C(O)).

Composé I4 : bromure de *N*-méthyl-*N*-(4-méthyl-2-oxopentyl)imidazolium, [MIMMIBK]Br, de formule

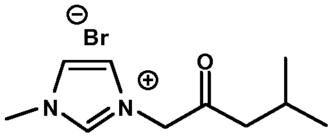

[MIMMIBK]Br

***1H NMR*** (400 MHz, $CDCl_3$) δ (ppm): 0,91 (d, 3H, J = 6,5 Hz, $CH_3$) ; 2,15 (m, 1H, CH) ; 2,53 (d, 2H, J = 7,0 Hz, C(O)-$CH_2$) ; 4,02 (s, 3H, $CH_3$-N) ; 5,67 (s, 2H, N-$CH_2$-C(O)) ; 7,47 (q, 1H, J = 2,0 Hz, $CH_{Ar}$) ; 7,61 (q, 1H, J = 2,0 Hz, $CH_{Ar}$) ; 9,78 (s, 1H, J = 2,0 Hz, $CH_{Ar}$).
***13C NMR*** (100 MHz, $CDCl_3$) δ (ppm): 22,6 ($CH_3$) ; 24,2 (CH) ; 36,9 ($CH_3$-Ar) ; 48,9 (C(O)-$CH_2$) ; 60,0 (N-$CH_2$-C(O)) ; 122,7 ($CH_{Ar}$) ; 124,1 ($CH_{Ar}$) ; 137,9 ($CH_{Ar}$) ; 201,7 (C(O)).

Composé I5 : bromure de *N*-(4-méthyl-2-oxopentyl)pyridinium, [PyMIBK]Br, de formule

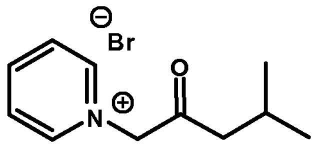

**[PyMIBK]Br**

***1H NMR*** (400 MHz, $CDCl_3$) δ (ppm): 0,91 (d, 3H, J = 6,5 Hz, $CH_3$) ; 2,19 (m, 1H, CH) ; 2,57 (d, 2H, J = 7,0 Hz, C(O)-$CH_2$) ; 6,51 (s, 2H, N-$CH_2$-C(O)) ; 8,04 (t, 2H, J = 7,0 Hz, $CH_{Ar}$) ; 8,49 (q, 1H, J = 7,0 Hz, $CH_{Ar}$) ; 9,31 (d, 2H, J = 6,0 Hz, $CH_{Ar}$).
***13C NMR*** (100 MHz, $CDCl_3$) δ (ppm): 22,7 ($CH_3$) ; 24,1 (CH) ; 49,0 (C(O)-$CH_2$) ; 66,6 (N-$CH_2$-C(O)) ; 127,6 ($CH_{Ar}$) ; 145,5 ($CH_{Ar}$) ; 146,3 ($CH_{Ar}$) ; 200,3 (C(O)).

Composé I6 : iodure de *N*-éthyl-*N*-pinacolone pipéridinium, [EPipPin]I, de formule

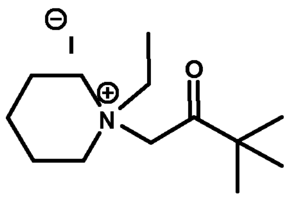

**[EPipPin]I**

Le protocole opératoire mis en oeuvre pour synthétiser le Composé I6 est le suivant : à une solution de 20 mmol de 1-iodopinacolone dans 20 mL d'acétate d'éthyle sont ajoutées 24 mmol d'éthylpipéridine et le mélange est agité à 50 °C pendant 12 h. Le mélange hétérogène obtenu est ensuite filtré, les sels sont lavés 2 fois à l'acétate d'éthyle puis le solvant est évaporé sous pression réduite. Le composé [EPipPin]I, qui est obtenu avec un rendement de 80%, se présente sous la forme d'un solide blanc très hygroscopique. Les données de caractérisation de ce composé sont les suivantes :

***1H NMR*** (400 MHz, $CDCl_3$) δ (ppm): 1,26 (s, 9H, $CH_3$) ; 1,31 (t, 3H, J = 7,5 Hz, $CH_3$-$CH_2$-N) ; 1,74-1,98 (m, 6H, $CH_2$) ; 3,73-3, 84 (m, 4H, $CH_2$-N ; $CH_3$-$CH_2$-N) ; 4,20 (m, 2H, $CH_2$-N) ; 5,07 (s, 2H, N-$CH_2$-C(O)).
***13C NMR*** (100 MHz, $CDCl_3$) δ (ppm): 8,6 ($CH_3$-$CH_2$-N) ; 20,0 ; 20,5 ($CH_2$); 26,6 ($CH_3$) ; 45,0 (C(O)-$C(CH_3)_3$) ; 52,5 ($CH_3$-$CH_2$-N) ; 59,6 ($CH_2$-N ; N-$CH_2$-C(O)) ; 208,1 (C(O)).

Composé I7 : chlorure de *N*-pinacolone méthylimidazolium, [MIMPin]Cl, de formule

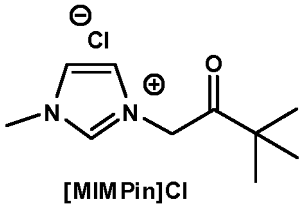

**[MIMPin]Cl**

Le protocole opératoire mis en oeuvre pour synthétiser le Composé I7 est le suivant : à une solution de 20 mmol de 1-chloropinacolone dans 20 mL d'acétate d'éthyle sont ajoutées 24 mmol de méthylimidazole et le mélange

est agité à température ambiante pendant 12 h. Le mélange hétérogène obtenu est ensuite filtré, les sels sont lavés 2 fois à l'acétate d'éthyle puis le solvant est évaporé sous pression réduite. Le composé [MIMPin]Cl, qui est obtenu avec un rendement de 80%, se présente sous la forme d'un solide blanc très hygroscopique.

Les données de caractérisation de ce composé sont les suivantes :

***$^1$H NMR*** (400 MHz, $CDCl_3$) δ (ppm): 1,20 (s, 9H, $CH_3$) ; 3,96 (s, 3H, $CH_3$-Ar) ; 5,84 (s, 2H, N-$CH_2$-C(O)) ; 7,49 (s, 1H, $CH_{Ar}$) ; 7,62 (s, 1H, $CH_{Ar}$) ; 10,07 (s, 1H, $CH_{Ar}$).

***$^{13}$C NMR*** (100 MHz, $CDCl_3$) δ (ppm): 26,2 ($CH_3$) ; 36,6 ($CH_3$-N) ; 43,4 ($(CH_3)_3$-C-C(O)) ; 54,3 (C(O)-$CH_2$) ; 122,5 ($CH_{Ar}$) ; 124,2 ($CH_{Ar}$) ; 138,4 ($CH_{Ar}$) ; 206,8 (C(O)).

**1.1.2** Selon la voie B

Les réactions mises en œuvre sont les suivantes :

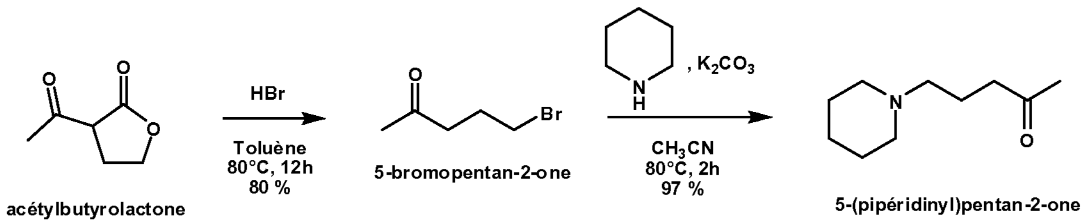


(2bis)

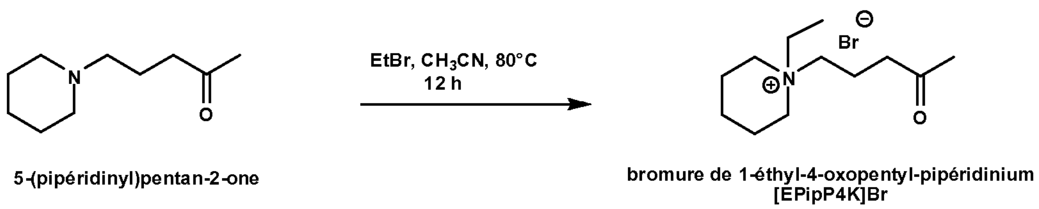


(2'bis)

**B.1** Synthèse de la 5-bromopentan-2-one

À une solution de 10 g (78 mmol) d'acétylbutyrolactone dans le toluène sont ajoutés 13,5 mL (117 mmol) d'acide bromhydrique à 48%. Le mélange est chauffé à 80 °C durant la nuit. Après refroidissement, le mélange biphasique est séparé. La phase aqueuse est extraite deux fois au diéthyléther. Les phases organiques sont ensuite rassemblées, lavées deux fois à l'eau, séchées sur sulfate de magnésium et concentrées. Après distillation sous pression réduite (100 °C sous 20 mmbar), on obtient la 5-bromopentan-2-one (12,7 g, soit un rendement de 80%) qui se présente sous la forme d'une huile incolore.

Les données de caractérisation de ce composé sont les suivantes :

***$^1$H NMR*** (400 MHz, $CDCl_3$) δ (ppm): 2,11 (m, 2H, (O)C-$CH_2$-$CH_2$-$CH_2$-Br) ; 2,16 (s, 3H, $CH_3$-(O)C) ; 2,63 (t, J = 7,0 Hz, 2H, (O)C-$CH_2$-$CH_2$-$CH_2$-Br) ; 3,44 (t, J = 6,5 Hz, 2H, (O)C-$CH_2$-$CH_2$-$CH_2$-Br).

**B.2** Synthèse de la 5-(pipéridinyl)pentan-2-one

À une solution de 2,4 mL (23,7 mmol) de pipéridine dans 30 mL d'acétonitrile sec, sont ajoutés, successivement et sous atmosphère inerte, 6,0 g (43 mmol) de carbonate de potassium puis une solution formée par 3,56 g (21,6 mmol) de 5-bromopentan-2-one synthétisée au paragraphe **B.1** dans 10 mL d'acétonitrile sec. Le mélange est ensuite chauffé à 80 °C durant 2 h. Après refroidissement, le mélange est filtré, les sels sont lavés à l'acétonitrile. Le mélange est ensuite concentré sous vide. La 5-(pipéridinyl)pentan-2-one (3,53 g, soit un rendement de 97%) ainsi obtenue se présente sous la forme d'une huile légèrement jaune.

Les données de caractérisation de ce composé sont les suivantes :

***$^1$H NMR*** (400 MHz, $CDCl_3$) δ (ppm): 1,39 (m, 2H, $CH_2$-$CH_2$-$CH_2$-N) ; 1,53 (m, 4H, $CH_2$-$CH_2$-$CH_2$-N) ; 1,74 (m, 2H, (O)C-$CH_2$-$CH_2$-$CH_2$-N) ; 2,13 (s, 3H, $CH_3$-(O)C) ; 2,24 (t, J = 7,5 Hz, 2H, (O)C-$CH_2$-$CH_2$-$CH_2$-N) ; 2,32 (bs, 4H, $CH_2$-$CH_2$-$CH_2$-N) ; 2,41 (t, J = 7,0 Hz, 2H, (O)C-$CH_2$-$CH_2$-$CH_2$-N).

***$^{13}$C NMR*** (100 MHz, $CDCl_3$) δ (ppm): 21,3 ((O)C-$CH_2$-$CH_2$-$CH_2$-N) ; 24,5 ($CH_2$-$CH_2$-$CH_2$-N) ; 26,0 ($CH_2$-$CH_2$-$CH_2$-N) ; 30,1 (C(O)-$CH_3$) ; 41,8 ((O)C-$CH_2$-$CH_2$-$CH_2$-N) ; 54,6 ($CH_2$-$CH_2$-$CH_2$-N) ; 58,6 ((O)C-

C$H_2$-$CH_2$-$CH_2$-N) ; 209,0 (C(O)).

**B.3** Synthèse du bromure de 1-éthyl-4-oxopentyl-pipéridinium [EPipP4K]Br

À une solution de 3,53 g (20,1 mmol) de 5-(pipéridinyl)pentan-2-one synthétisée au paragraphe **B.2** dans 10 mL d'acétonitrile, sont ajoutés, sous atmosphère inerte, 3,3 mL (40 mmol) de bromoéthane. Le mélange est ensuite chauffé à 80 °C pendant 12 h. Après refroidissement, le mélange est concentré sous vide. Le solide résultant est dissout dans le minimum de dichlorométhane et re-précipité par ajout d'acétate d'éthyle. Le solide est ensuite lavé deux fois à l'acétate d'éthyle puis séché sous vide. Le composé [EPipP4K]Br, noté I8, ainsi obtenu se présente sous la forme d'un solide légèrement jaune (5,28 g, soit un rendement de 95%).

Les données de caractérisation de ce composé sont les suivantes :

***$^1$H NMR*** (400 MHz, $CDCl_3$) $\delta$ (ppm): 1,35 (t, J = 7,5 Hz, C$H_3$-$CH_2$-N) ; 1,74 (m, 2H, C$H_2$-$CH_2$-$CH_2$-N) ; 1,79-1,97 (m, 6H, $CH_2$-C$H_2$-$CH_2$-N ; (O)C-$CH_2$-C$H_2$-$CH_2$-N) ; 2,12 (s, 3H, C$H_3$-(O)C) ; 2,72 (t, J = 6,0 Hz, 2H, (O)C-C$H_2$-$CH_2$-$CH_2$-N) ; 3,47-3,63 (m, 8H, $CH_2$-$CH_2$-C$H_2$-N ; (O)C-$CH_2$-$CH_2$-C$H_2$-N ; $CH_3$-C$H_2$-N).
***$^{13}$C NMR*** (100 MHz, $CDCl_3$) $\delta$ (ppm): 7,5 ($CH_3$-$CH_2$-N) ; 16,0 ; 19,8 ($CH_2$-$CH_2$-$CH_2$-N ; (O)C-$CH_2$-$CH_2$-$CH_2$-N) ; 20,8 ($CH_2$-$CH_2$-$CH_2$-N) ; 30,1 (C(O)-$CH_3$) ; 39,1 ((O)C-$CH_2$-$CH_2$-$CH_2$-N) ; 54,2 ; 56,3 ($CH_2$-$CH_2$-$CH_2$-N) ; 58,7 ($CH_3$-$CH_2$-N) ; 207,3 (C(O)).

**1.2 Synthèse de liquides ioniques (Composés LI)**

Les liquides ioniques comprenant une fonction cétone mis en œuvre dans le cadre de la présente invention sont obtenus à partir des composés intermédiaires tels que synthétisés au chapitre **1.1** ci-dessus, par échange de l'anion halogénure ($Br^-$, $I^-$ ou $Cl^-$) par l'anion *bis*-(trifluorométhanesulfonyl)imide, $NTf_2^-$.

La réaction correspondante dépend de la voie A ou B mise en œuvre pour l'obtention des Composés I.

**1.2.1** Composés I1 à 17 obtenus selon la voie A

L'échange de l'anion halogénure par l'anion $NTf_2^-$ s'effectue selon la réaction (1'bis) suivante :

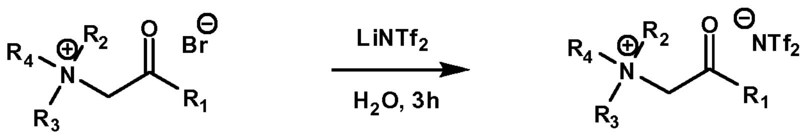


Composé I — Composé LI

(1'bis)

Le protocole opératoire suivi pour la synthèse des Composés LI est décrit en référence à la synthèse du *bis*-(trifluorométhanesulfonyl)imide de *N*-éthyl-*N*-(4-méthyl-2-oxopentyl)pipéridinium, [EPipMIBK]$NTf_2$, noté LI1, à partir du [EPipMIBK]Br (Composé I1) synthétisé au chapitre **A.2** ci-dessus.

À une solution de 20,0 g (68 mmol) de [EPipMIBK]Br dans 20 mL d'eau distillée est ajoutée une solution de 20,0 g (69 mmol) de *bis*-(trifluorométhanesulfonyl)imide de lithium dans 20 mL d'eau distillée. Le mélange est agité pendant 2 h à température ambiante. Le mélange biphasique est ensuite séparé. La phase organique est lavée à l'eau jusqu'à ce que le test au nitrate d'argent soit négatif puis le liquide ionique est séché sous vide à 80 °C pendant 3 h. Le composé [EPipMIBK]$NTf_2$ obtenu, noté LI1, se présente sous la forme d'une huile visqueuse jaune (32,1 g, soit un rendement de 95%).

Les composés LI2 à LI7 ont été synthétisés à partir des composés I2 à I7 respectivement, conformément au protocole opératoire qui vient d'être décrit.

Le Tableau 3 ci-dessous rassemble les données relatives aux liquides ioniques LI1 à LI7 ainsi synthétisés.

Tableau 3

| Composé LI | Composé I | | Abréviation du Composé LI | Rendement (%) |
|---|---|---|---|---|
| LI1 | I1 | [EPipMIBK]Br | [EPipMIBK]$NTf_2$ | 95 |
| LI2 | I2 | [EPipAcP]Br | [EPipAcP]$NTf_2$ | 95 |
| LI3 | I3 | [EPipMAcP]Br | [EPipMAcP]$NTf_2$ | 95 |

(suite)

| Composé LI | Composé I | | Abréviation du Composé LI | Rendement (%) |
|---|---|---|---|---|
| LI4 | I4 | [MIMMIBK]Br | [MIMMIBK]$NTf_2$ | 95 |
| LI5 | I5 | [PyMIBK]Br | [PyMIBK]$NTf_2$ | 95 |
| LI6 | I6 | [EPipPin]I | [EPipPin]$NTf_2$ | 95 |
| LI7 | I7 | [MIMPin]Cl | [MIMPin]$NTf_2$ | 95 |

Les formules semi-développées et données de caractérisation de ces composés LI1 à LI7 sont les suivantes :

Composé LI1 : *bis*-(trifluorométhanesulfonyl)imide de *N*-éthyl-*N*-(4-méthyl-2-oxopentyl)-pipéridinium, [EPipMIBK] $NTf_2$, de formule

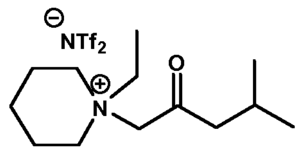

**[EPipMIBK]$NTf_2$**

***$^1H$ NMR*** (400 MHz, $CDCl_3$) $\delta$ (ppm): 0,90 (d, 3H, J = 6,5 Hz, C*$H_3$*) ; 1,23 (t, 3H, J = 7,5 Hz, C*$H_3$*-$CH_2$-N) ; 1,70 (m, 2H, $CH_2$) ; 1,87 (m, 4H, $CH_2$) ; 2,12 (m, 1H, CH) ; 2,39 (d, 2H, J = 7,0 Hz, C(O)-C*$H_2$*) ; 3,44 (m, 2H, $CH_2$-N) ; 3,62 (m, 2H, C*$H_2$*-N) ; 3,72 (q, 2H, J = 7,5 Hz, $CH_3$-C*$H_2$*-N) ; 4,22 (s, 2H, N-C*$H_2$*-C(O)).
***$^{13}C$ NMR*** (100 MHz, $CDCl_3$) $\delta$ (ppm): 7,4 (*C*$H_3$-$CH_2$-N) ; 19,5 ; 20,6 (*C*$H_2$); 22,1 (*C*$H_3$) ; 24,2 (CH) ; 49,5 (C(O)-*C*$H_2$) ; 55,0 ($CH_3$-*C*$H_2$-N) ; 60,0 (*C*$H_2$-N) ; 61,8 (N-*C*$H_2$-C(O)) ; 115,1-118,2-121,4-124,6 (q, J = 321 Hz, *C*$F_3$) ; 201,6 (C(O)).

Composé LI2 : *bis*-(trifluorométhanesulfonyl)imide de *N*-éthyl-*N*-acétophénone pipéridinium, [EPipAcP]$NTf_2$, de formule

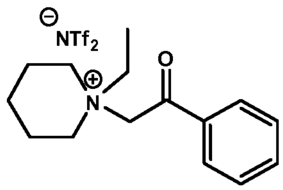

**[EPipAcP]$NTf_2$**

***$^1H$ NMR*** (400 MHz, $CDCl_3$) $\delta$ (ppm): 1,28 (t, 3H, J = 7,5 Hz, C*$H_3$*-$CH_2$-N) ; 1,76 (m, 2H, C*$H_2$*) ; 1,94 (m, 4H, C*$H_2$*) ; 3,60 (m, 2H, $CH_2$-C*$H_2$*-N) ; 3,85 (m, 4H, J = 7,5 Hz, $CH_3$-C*$H_2$*-N, $CH_2$-C*$H_2$*-N) ; 4,85 (s, 2H, N-C*$H_2$*-C(O)) ; 7,52 (t, 2H, J = 7,5 Hz, C*$H_{Ar}$*) ; 7,67 (t, 1H, J = 7,5 Hz, C*$H_{Ar}$*) ; 8,00 (d, 2H, J = 7,5 Hz, C*$H_{Ar}$*).
***$^{13}C$ NMR*** (100 MHz, $CDCl_3$) $\delta$ (ppm): 7,7 (*C*$H_3$) ; 19,8 ; 20,8 (*C*$H_2$) ; 55,2 ($CH_3$-*C*$H_2$-N) ; 59,6 (*C*$H_2$-N) ; 60,7 (N-*C*$H_2$-C(O)) ; 115,1 - 118,2 - 121,4 - 124,6 (q, J = 321 Hz, *C*$F_3$) ; 128,3 ; 129,4 (*C*$H_{Ar}$) ; 133,7 (*C*$_{Ar}$) ; 135,5 (*C*$H_{Ar}$) ; 190,3 (*C*(O)).

Composé LI3 : *bis*-(trifluorométhanesulfonyl)imide de *N*-éthyl-*N*-4'-méthylacétophénone pipéridinium, [EPipMAcP] $NTf_2$, de formule

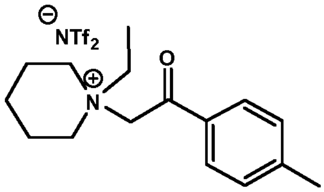

**[EPipMAcP]NTf$_2$**

***$^1$H NMR*** (400 MHz, $CDCl_3$) δ (ppm): 1,28 (t, 3H, J = 7,5 Hz, C*$H_3$*-$CH_2$-N) ; 1,76 (m, 2H, C*$H_2$*) *;* 1,94 (m, 4H, C*$H_2$*) ; 3,60 (m, 2H, $CH_2$-C*$H_2$*-N) ; 3,85 (m, 4H, J = 7,5 Hz, $CH_3$-C*$H_2$*-N, $CH_2$-C*$H_2$*-N) ; 4,85 (s, 2H, N-C*$H_2$*-C(O)) ; 7,52 (t, 2H, J = 7,5 Hz, C*$H_{Ar}$*) ; 7,67 (t, 1H, J = 7,5 Hz, C*$H_{Ar}$*) *;* 8,00 (d, 2H, J = 7,5 Hz, C*$H_{Ar}$*).
***$^{13}$C NMR*** (100 MHz, $CDCl_3$) δ (ppm): 7,7 (*C*$H_3$) ; 19,9 ; 20,8 (*C*$H_2$) ; 21,8 (*C*$H_3$-Ar) ; 22,0 ($CH_3$-*C*$H_2$-N) ; 51,2 ($CH_3$-*C*$H_2$-N) ; 59,5 (*C*$H_2$-N) ; 60,8 (N-*C*$H_2$-C(O)) ; 115,1 - 118,2 - 121,4 - 124,6 (q, J = 321 Hz, *C*F3) ; 128,5 ; 130,1 (*C*$H_{Ar}$) ; 131,2 (*C*$_{Ar}$) ; 147,1 (*C*$_{Ar}$) ; 189,7 (*C*(O)).

Composé LI4 : *bis*-(trifluorométhanesulfonyl)imide de *N*-méthyl-*N*-(4-méthyl-2-oxopentyl)imidazolium, [MIMMIBK] $NTf_2$, de formule

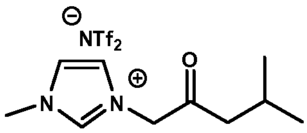

**[MIMMIBK]NTf$_2$**

***$^1$H NMR*** (400 MHz, $CDCl_3$) δ (ppm): 0,96 (d, 3H, J = 6,5 Hz, C*$H_3$*) ; 2,17 (m, 1H, CH) ; 2,51 (d, 2H, J = 7,0 Hz, C(O)-$CH_2$) ; 3,96 (s, 3H, C*$H_3$*-N) ; 5,2 (s, 2H, N-C*$H_2$*-C(O)) ; 7,46 (t, 1H, J = 2,0 Hz, C*$H_{Ar}$*) ; 7,57 (t, 1H, J = 2,0 Hz, C*$H_{Ar}$*) ; 8,77 (s, 1H, J = 2,0 Hz, C*$H_{Ar}$*).
***$^{13}$C NMR*** (100 MHz, $CD_3OD$) δ (ppm): 22,8 (*C*$H_3$) ; 25,3 (CH) ; 36,6 (*C*$H_3$-Ar) ; 49,1 (C(O)-CH2) ; 58,4 (N-*C*$H_2$-C(O)) ; 116,4 - 119,6 - 122,8 - 126,0 (q, J = 321 Hz, CF3) ;124,4 (CHAr) ; 125,0 (*C*$H_{Ar}$) ; 139,0 (*C*$H_{Ar}$) ; 202,3 (C(O)).

Composé LI5 : *bis*-(trifluorométhanesulfonyl)imide de *N*-(4-méthyl-2-oxopentyl)pyridinium, [PyMIBK]$NTf_2$, de formule

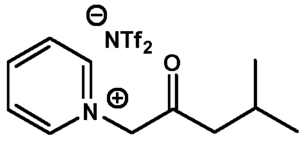

**[PyMIBK]NTf$_2$**

***$^1$H NMR*** (400 MHz, $CDCl_3$) δ (ppm): 1,00 (d, 3H, J = 6,5 Hz, C*$H_3$*) ; 2,20 (m, 1H, CH) ; 2,61 (d, 2H, J = 7,0 Hz, C(O)-C*$H_2$*) ; 5,67 (s, 2H, N-C*$H_2$*-C(O)) ; 8,14 (m, 2H, C*$H_{Ar}$*) ; 8,66 (tt, 1H, J = 8,0 Hz ; J = 1,5 Hz, C*$H_{Ar}$*) ; 8,74 (m, 2H, C*$H_{Ar}$*).
***$^3$C NMR*** (100 MHz, $CD_3OD$) δ (ppm): 22,9 (*C*$H_3$) ; 25,3 (CH) ; 49,1 (C(O)-*C*$H_2$) ; 69,6 (N-$CH_2$-C(O)) ; 116,4 - 119,6 - 122,8 - 126,0 (q, J = 321 Hz, CF3) ;129,2 (CHAr) ; 147,3 (CHAr) ; 147,6 (*C*$H_{Ar}$) ; 201,4 (C(O)).

Composé LI6 : *bis*-(trifluorométhanesulfonyl)imide de *N*-éthyl-*N*-pinacolone pipéridinium, [EPipPin]$NTf_2$, de formule

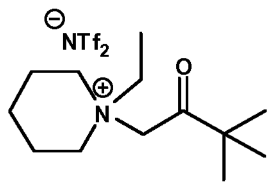

[EPipPin]$NTf_2$

***1H NMR*** (400 MHz, $CDCl_3$) δ (ppm): 1,23 (s, 9H, C*H*$_3$) ; 1,26 (t, 3H, J = 7,5 Hz, C*H*$_3$-$CH_2$-N) ; 1,75 (m, 2H, $CH_2$) ;1,88 (m, 4H, C*H*$_2$) ; 3,54 (m, 2H, C*H*$_2$-N) ; 3,68 (m, 2H, C*H*$_2$-N) ; 3,74 (q, 2H, J = 7,5 Hz, $CH_3$-C*H*$_2$-N) ; 4,40 (s, 2H, N-C*H*$_2$-C(O)).

***13C NMR*** (100 MHz, $CDCl_3$) δ (ppm): 7,6 (*C*$H_3$-$CH_2$-N) ; 19,8 ; 20,8 (*C*$H_2$); 26,1 (*C*$H_3$) ; 45,1 (C(O)-*C*-$(CH_3)_3$) ; 53,6 ($CH_3$-*C*$H_2$-N) ; 59,5 (N-$CH_2$-C(O)) ; 60,1 (*C*$H_2$-N) ; 115,1 - 118,2 - 121,5 - 124,7 (q, J = 321 Hz, *C*$F_3$) ; 207,6 (*C*(O)).

Composé LI7 : *bis*-(trifluorométhanesulfonyl)imide de *N*-pinacolone méthylimidazolium, [MIMPin]$NTf_2$, de formule

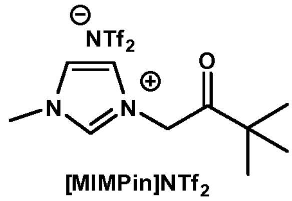

[MIMPin]$NTf_2$

***1H NMR*** (400 MHz, $CDCl_3$) δ (ppm): 1,25 (s, 9H, C*H*$_3$) ; 3,94 (s, 3H, C*H*$_3$-Ar) ; 5,31 (s, 2H, N-C*H*$_2$-C(O)) ; 7,28 (3, 2H, C*H*$_{Ar}$) ; 8,69 (s, 1H, C*H*$_{Ar}$).

***13C NMR*** (100 MHz, $CDCl_3$) δ (ppm): 26,0 (*C*$H_3$) ; 36,5 (*C*$H_3$-N) ; 43,6 ($(CH_3)_3$-*C*-C(O)) ; 53,9 (C(O)-*C*$H_2$-N) ; 115,1 - 118,2 - 121,4 - 124,6 (q, J = 321 Hz, CF3) ; 122,8 (CHAr) ; 124,1 (CHAr) ; 137,7 (*C*$H_{Ar}$) ; 206,0 (*C*(O)).

**1.2.2** Composé 18 obtenu selon la voie B

L'échange de l'anion halogénure du Composé I8 synthétisé au chapitre **B.3** ci-dessus par l'anion $NTf_2^-$ s'effectue selon la réaction (2"bis) suivante :

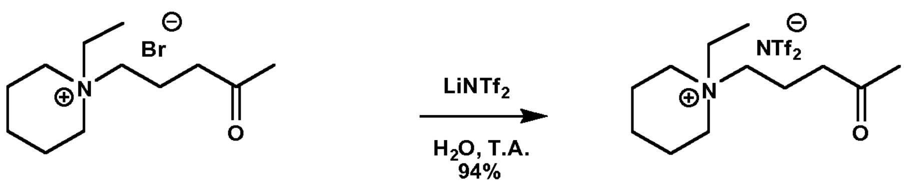


(2"bis)

[EPipP4K]Br [EPipP4K]$NTf_2$

Le protocole de synthèse suivi pour la synthèse du Composé LI8 est le suivant : à une solution de 5,28 g (19,5 mmol) de [EPipP4K]Br dans 10 mL d'eau déionisée est ajoutée une solution de 5,5 g (20 mmol) de *bis*-(trifluorométhanesulfonyl)imide de lithium dans 10 mL d'eau distillée. Le mélange est ensuite agité durant 3 h. La phase aqueuse est ensuite éliminée. Le produit est ensuite lavé à l'eau (3 fois avec 15 mL) puis dissout dans du dichlorométhane. Le mélange est alors séché sur sulfate de magnésium, filtré et concentré sous vide. Le *bis*-(trifluorométhanesulfonyl)imide de 1-éthyl-4-oxopentyl-pipéridinium, ou [EPipP4K]$NTF_2$, noté LI8, ainsi obtenu se présente sous la forme d'une huile jaune (7,6 g, soit un rendement de 83%).

Les données de caractérisation de ce Composé LI8 sont les suivantes :

***1H NMR*** (400 MHz, $CDCl_3$) δ (ppm): 1,34 (t, J = 7,5 Hz, C*H*$_3$-$CH_2$-N) ; 1,71 (m, 2H, C*H*$_2$-$CH_2$-$CH_2$-N) ; 1,80-1,96 (m, 6H, $CH_2$-C*H*$_2$-$CH_2$-N ; (O)C-$CH_2$-C*H*$_2$-$CH_2$-N) ; 2,15 (s, 3H, C*H*$_3$-(O)C) ; 2,64 (t, J = 6,0 Hz, 2H, (O)C-C*H*$_2$-$CH_2$-$CH_2$-N) ; 3,21 (m, 2H, (O)C-$CH_2$-$CH_2$-C*H*$_2$-N) ; 3,25-3,37 (m, 6H, $CH_2$-$CH_2$-C*H*$_2$-N ; $CH_3$-C*H*$_2$-N).

***13C NMR*** (100 MHz, $CDCl_3$) δ (ppm): 7,0 (*C*$H_3$-$CH_2$-N) ; 15,4 ; 19,5 ($CH_2$-*C*$H_2$-$CH_2$-N ; (O)C-$CH_2$-*C*$H_2$-$CH_2$-N) ; 20,9 (*C*$H_2$-$CH_2$-$CH_2$-N) ; 29,8 (C(O)-*C*$H_3$) ; 38,6 ((O)C-*C*$H_2$-$CH_2$-$CH_2$-N) ; 54,7 ; 56,3 ($CH_2$-$CH_2$-*C*$H_2$-N) ; 59,2 ($CH_3$-*C*$H_2$-N) ; 115,1 - 118,3 - 121,5 - 124,7 (q, J = 321 Hz, *C*$F_3$) ; 207,3 (C(O)).

**Exemple 2 : Synthèse d'un liquide ionique LI9 comprenant une fonction alcool**

Ce liquide ionique LI9 peut être synthétisé selon la réaction (3bis) suivante :

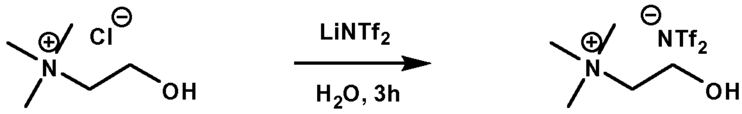


(3bis)

chlorure de choline

Le protocole opératoire correspondant est le suivant : à une solution de 5 g (36 mmol) de chlorure de choline dans 20 mL d'eau est ajoutée une solution de 10,3 g (36 mmol) de *bis*-(trifluorométhanesulfonyl)imide de lithium dans 20 mL d'eau. Le mélange est agité 3 h à température ambiante puis les phases sont séparées. Le liquide ionique est lavé deux fois avec 30 mL d'eau puis séché sous vide.

Les données de caractérisation de ce Composé LI9 sont les suivantes : ***$^1$H NMR*** (400 MHz, DMSO-$d_6$) δ (ppm): d 5,27 (t, 1H), 3,83 (m, 2H), 3,39 (m, 2H), 3,10 (s, 9H).

**Exemple 3** : **Synthèse d'un liquide ionique LI10 comprenant une fonction phosphonate**

Comme décrit ci-avant, les liquides ioniques comprenant une fonction phosphonate peuvent être synthétisés selon la réaction (6) suivante :

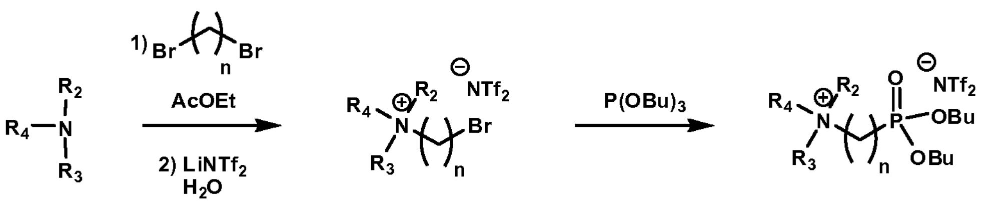


(6)

Le liquide ionique LI10 est synthétisé à partir de l'éthylpipéridine, selon le protocole opératoire suivant :

**3.1** Synthèse du bromure de (4-bromobutyl)-éthylpipéridinium [EPipBPhos]Br

À une solution de 9 mL (66 mmol) d'éthylpipéridine dans 50 mL d'acétate d'éthyle sont ajoutés 15 mL (122 mmol) de dibromobutane. Le mélange est ensuite agité à 50°C durant une nuit. Après refroidissement, le solide est filtré, lavé au diéthyléther (deux fois avec 30 mL) et séché sous vide. On obtient le bromure de (4-bromobutyl)-éthylpipéridinium (14,8 g, soit un rendement de 68%) qui se présente sous la forme d'un solide blanc.

Les données de caractérisation de ce composé sont les suivantes :

***$^1$H NMR*** (400 MHz, $CDCl_3$) δ (ppm): 1,36 (t, J = 7,5 Hz, 3H, $C\mathit{H_3}$-$CH_2$-N) ; 1,77-1,85 (m, 2H, $C\mathit{H_2}$-$CH_2$-$CH_2$-N) ; 1,90-2,05 (m, 4H, $CH_2$-$C\mathit{H_2}$-$CH_2$-N) ; 2,31-2,41 (m, 2H, $CH_2$-$C\mathit{H_2}$-$CH_2$-Br) ; 3,62 (t, J = 6,0 Hz, 2H, $CH_2$-Br) ; 3,67-3,77 (m, 8H, $C\mathit{H_2}$-N).

***$^{13}$C NMR*** (100 MHz, $CDCl_3$) δ (ppm): 7,3 (*C*$H_3$-$CH_2$-N) ; 20,0 ($CH_2$-*C*$H_2$-$CH_2$-N) ; 20,8 ($C\mathit{H_2}$-$CH_2$-$CH_2$-N) ; 25,0 (N-$CH_2$-*C*$H_2$-$CH_2$-Br) ; 29,6 (N-$CH_2$-$CH_2$-*C*$H_2$-Br) ; 54,6 (*C*$H_3$-$CH_2$-N) ; 56,2 (N-*C*$H_2$-$CH_2$-$CH_2$-Br) ; 59,2 ($CH_2$-*C*$H_2$-$CH_2$-N).

**3.2** Synthèse du *bis*-(trifluorométhanesulfonyl)imide de (4-bromobutyl)-éthylpipéridinium

À une solution de 12,3 g (37 mmol) de bromure de (4-bromobutyl)-éthylpipéridinium dans 30 mL d'eau est ajoutée une solution de 10,8 g (38 mmol) de *bis*-(trifluorométhanesulfonyl)imide de lithium dans 10 mL d'eau. Le mélange est agité 3 h à température ambiante puis les phases sont séparées. Le liquide ionique est lavé 3 fois avec 30 mL d'eau puis séché sous vide. Le *bis*-(trifluorométhanesulfonyl)imide de (4-bromobutyl)éthylpipéridinium (16,32 g, soit un rendement de 83 %) obtenu se présente sous la forme d'une huile visqueuse incolore.

Les données de caractérisation de ce composé sont les suivantes :

***$^1$H NMR*** (400 MHz, $CD_2Cl_2$) δ (ppm): 1,36 (t, J = 7,5 Hz, 3H, $C\mathit{H_3}$) ; 1,73-1,79 (m, 2H, $C\mathit{H_2}$-$CH_2$-$CH_2$-N) ; 1,89-1,96

(bs, 4H, $CH_2$-$CH_2$-$CH_2$-N) ; 2,22-2,31 (m, 2H, $CH_2$-$CH_2$-$CH_2$-Br) ; 3,30-3,34 (m, 8H, $CH_2$-N) ; 3,55 (t, J = 6,0 Hz, 2H, $CH_2$-Br)

***$^{13}$C NMR*** (100 MHz, $CD_2Cl_2$) δ (ppm): 6,9 ($CH_3$-$CH_2$-N) ; 19,5 ($CH_2$-$CH_2$-$CH_2$-N) ; 20,8 ($CH_2$-$CH_2$-$CH_2$-N) ; 24,4 (N-$CH_2$-$CH_2$-$CH_2$-Br) ; 28,7 (N-$CH_2$-$CH_2$-$CH_2$-Br) ; 54,6 ($CH_3$-$CH_2$-N) ; 56,6 (N-$CH_2$-$CH_2$-$CH_2$-Br) ; 59,2 ($CH_2$-$CH_2$-$CH_2$-N ;) ; 115,1 - 118,2 - 121,4 - 124,6 (q, J = 321 Hz, $CF_3$)

**3.3** Synthèse du *bis*-(trifluorométhanesulfonyl)imide de (4-(dibutoxyphosphory)butyl)-éthylpipéridinium [EPipBPhos] $NTf_2$, ou Composé LI10 de formule

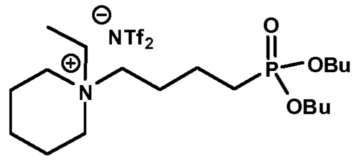

**[EPipBPhos]$NTf_2$**

Un mélange de 16,32 g (31 mmol) de *bis*-(trifluorométhanesulfonyl)imide de (4-bromobutyl)-éthylpipéridinium et de 25 mL (92 mmol) de tributylphosphite est agité à 160°C pendant 1 h. Après refroidissement, le mélange est lavé deux fois à l'éther et le composé est séché sous vide. Le *bis*-(trifluorométhanesulfonyl)imide de (4-(dibutoxyphosphory)butyl)-éthylpipéridinium [EPipBPhos]$NTf_2$ obtenu, noté LI10, se présente sous la forme d'une huile incolore (16,9 g, soit un rendement de 85%).

Les données de caractérisation de ce Composé LI10 sont les suivantes :

***$^1$H NMR*** (400 MHz, $CDCl_3$) δ (ppm): 0,93 (t, J = 7,5 Hz, 6H, $CH_3$-$(CH_2)_3$-O) ; 1,32 (t, J = 7,5 Hz, 3H, $CH_3$-$CH_2$-N) ; 1,36-1,43 (m, 4h, $CH_3$-$CH_2$-$(CH_2)_2$-O) ; 1,60-1,88 (m, 16H, $CH_2$-P ; $CH_2$) ; 3,24 (m, 2H, $CH_2$-N) ; 3,31-3,40 (m, 6H, $CH_2$-N) ; 4,0 (m, 4H, O-$CH_2$-$(CH_2)_3$-$CH_3$)

***$^{13}$C NMR*** (100 MHz, $CDCl_3$) δ (ppm): 7,2 ($CH_3$) ; 13,6 ($CH_3$-$(CH_2)_3$-O) ; 18,8 ($CH_3$-$CH_2$-$(CH_2)_2$-O) ; 19,7 ($CH_2$-$CH_2$-N); 20,0 ; 20,9 ; 21,6 ; 21,7 ($CH_2$-$CH_2$-N) ; 23,5 - 25,0 (d, J = 140,0 Hz, $CH_2$-P) ; 32,5 ; 32,6 (d, J = 6,5 Hz, $CH_3$-$CH_2$-$CH_2$-$CH_2$-O) ; 54,0 ; 57,9 ; 59,2 ($CH_2$-N) ; 65,6 (d, J = 7,0 Hz, $CH_2$-O) ; 115,2 - 118,3 - 121,5 - 124,7 (q, J = 321 Hz, $CF_3$)

***$^{31}$P NMR*** (160 MHz, $CDCl_3$) δ (ppm): 30,3

## PROPRIÉTÉS EXTRACTANTES DES LIQUIDES IONIQUES

### MODALITÉS D'ÉVALUATION DES PROPRIÉTÉS EXTRACTANTES

Les propriétés extractantes des liquides ioniques ont été évaluées par la mesure des coefficients de distribution des espèces en solution, par spectrométrie d'émission optique par plasma à couplage inductif (en anglais, Inductively Coupled Plasma - Optic Emission Spectrometry ou ICP-OES).

L'efficacité d'extraction, ou de désextraction, est évaluée par la détermination du pourcentage d'extraction, ou de désextraction, à partir du coefficient de distribution, comme explicité ci-après.

* Le coefficient de distribution d'un élément métallique M, noté $D_M$, entre la phase constituée par le liquide ionique (notée "A2") et la phase aqueuse (notée "A1") est déterminé par l'équation suivante :

$$D_M = \frac{[M]_{A2}}{[M]_{A1}}$$

avec

$[M]_{A2}$ = concentration de l'élément métallique M dans le liquide ionique après extraction (en mg/L), et
$[M]_{A1}$ = concentration de l'élément métallique M dans la phase aqueuse après extraction (en mg/L).

* Le pourcentage d'extraction, noté E (%), est déterminé par l'équation suivante :

$$E\ (\%) = \frac{[M]_{A2}}{[M]_{A1\ initial}}\ x\ 100 = \frac{D_M}{D_M + \left(\frac{V_{A1}}{V_{A2}}\right)}\ x\ 100$$

avec

| | |
|---|---|
| $[M]_{A2}$ = | concentration de l'élément métallique M dans le liquide ionique après extraction (en mg/L) |
| $[M]_{A1initial}$ = | concentration de l'élément métallique M dans la phase aqueuse avant extraction (en mg/L) |
| $D_M$ = | coefficient de distribution de l'élément métallique M, |
| $V_{A1}$ = | volume de la phase aqueuse, et |
| $V_{A2}$ = | volume du liquide ionique. |

* Le pourcentage de désextraction, noté Déses(%), est déterminé par l'équation suivante :

$$\text{Désex}\ (\%) = \frac{[M]_{A3}}{[M]_{A2}}\ x\ 100$$

avec

| | |
|---|---|
| $[M]_{A3}$ = | concentration de l'élément métallique M dans la phase aqueuse après désextraction (en mg/L), et |
| $[M]_{A2}$ = | concentration de l'élément métallique M dans le liquide ionique après extraction et avant désextraction (en mg/L). |

* La sélectivité de l'extraction du métal M1 vis-à-vis du métal M2, notée S, est déterminée par l'équation suivante :

$$S = \frac{D_{M1}}{D_{M2}}$$

avec

| | |
|---|---|
| $D_{M1}$ = | coefficient de distribution de l'élément métallique M1, et |
| $D_{M2}$ = | coefficient de distribution de l'élément métallique M2. |

**PROTOCOLES OPÉRATOIRES**

Les phases aqueuses acides A1 ont été préparées par dilution, dans de l'acide sulfurique, de Ta au degré d'oxydation V et se présentant sous la forme de $NH_4TaF_6$ contenant 1% d'acide fluorhydrique dans de l'eau permutée, provenant de la société SCP Science.

Les compositions des phases aqueuses acides A1, avant contact, sont les suivantes, étant précisé que l'unité "M" utilisée ci-dessous et ci-après correspond à l'abréviation de l'unité du Système International "mol/L" :

- [Ta] : de 1 g/L à 10 g/L,
- $[H_2SO_4]$ : de 0 M à 9 M,
- avec addition éventuelle de niobium Nb et d'europium Eu, afin de se rapprocher des conditions rencontrées avec une phase aqueuse acide constituée par solution d'attaque acide d'un concentré d'un minerai naturel dans lequel Nb est présent avec Ta,
- avec addition éventuelle de niobium Nb, fer Fe, manganèse Mn, nickel Ni et argent Ag, afin de se rapprocher des conditions rencontrées avec une phase aqueuse acide constituée par solution d'attaque acide d'un concentré d'un minerai de phosphate qui contient principalement Ta, Nb, Fe et Mn, ou d'un minerai urbain provenant de condensateurs issus des D3E qui contiennent principalement Ta, Mn, Ni et Ag.

La phase aqueuse A3 utilisée pour les désextractions est constituée par de l'eau.

Les extractions sont réalisées par mise en contact de la phase aqueuse acide A1 avec le liquide ionique A2 considéré dans un rapport volumique entre la phase aqueuse acide et le liquide ionique $V_{A1}/V_{A2}$ allant de 1 à 16.

La phase aqueuse acide A1 et le liquide ionique A2 sont mis en contact pendant 1 h et à une température

comprise entre 20 °C et 25 °C puis centrifugés durant 5 min à 4000 t/min à 20 °C et séparés.

Les désextractions sont réalisées dans les mêmes conditions de temps de mise en contact, de température et de centrifugation, à l'exception du rapport volumique entre la phase aqueuse A3 et le liquide ionique $V_{A3}/V_{A2}$ qui est de 1 ou 2.

Le dosage des éléments métalliques présents dans les phases aqueuses est réalisé par analyse ICP-OES.

## RÉSULTATS EXPÉRIMENTAUX

### Exemple 4 : Extraction par des liquides ioniques comprenant une fonction cétone

**4.1** Pour déterminer l'influence de la concentration molaire en acide sulfurique de la phase aqueuse A1 sur les performances d'extraction, une première série d'extractions a été réalisée par mise en contact volume à volume des phases A1 et A2 suivantes :

| | |
|---|---|
| Phase aqueuse A1 : | [Ta] = 1 g/L dans des concentrations variables d'acide sulfurique ([$H_2SO_4$] = de 0 M à 9 M) |
| Phase A2 : | Liquide ionique LI1 : [EPipMIBK]$NTf_2$ |

Les valeurs calculées des coefficients de distribution du tantale $D_{Ta}$ ainsi que les pourcentages d'extraction E (%) et de désextraction Désex (%) sont reportées dans le tableau 4.1.

Tableau 4.1

| [$H_2SO_4$] (en M) | $D_{Ta}$ | E (%) | Désex (%) |
|---|---|---|---|
| 0 | 0,1 | 9,1 | - |
| 0,01 | 0,1 | 9,1 | - |
| 0,1 | 0,15 | 13,0 | - |
| 1 | 0,3 | 23,1 | - |
| 3 | 10,3 | 91,1 | 85 |
| 6 | 43,5 | 97,7 | 100 |
| 9 | 40,2 | 97,6 | 100 |

En se reportant également à la figure 1, qui illustre l'évolution du coefficient de distribution $D_{Ta}$ en fonction de la concentration molaire en acide sulfurique dans la phase aqueuse A1, on observe que l'extraction de Ta, qui ne débute qu'à partir d'une concentration de 3 M d'acide sulfurique (91,1%), est plus particulièrement efficace à des concentrations de 6 M et 9 M d'acide sulfurique, pour lesquelles 97,5% à 97,7% de Ta sont respectivement extraits. De surcroît, à ces deux dernières concentrations, on observe que Ta a pu être totalement désextrait du liquide ionique LI1, après deux lavages à l'eau.

**4.2** Pour déterminer l'influence de la concentration molaire en acide sulfurique de la phase aqueuse A1 sur la sélectivité de l'extraction, une deuxième série d'extractions a été réalisée par mise en contact volume à volume des phases A1 et A2 suivantes :

| | |
|---|---|
| Phase aqueuse A1 : | [Ta] = [Nb] = 1 g/L, [Eu] = 1,5 g/L dans des concentrations variables d'acide sulfurique ([$H_2SO_4$] = de 3 M à 9 M) |
| Phase A2 : | Liquide ionique LI1 : [EPipMIBK]$NTf_2$ |

Les pourcentages d'extraction $E_M$ (%) de chacun des métaux Ta, Nb et Eu initialement présents dans la phase aqueuse A1 sont illustrés à la figure 2. D'après cette figure 2, on observe que Ta est extrait à hauteur de 91% et jusqu'à 98% selon la concentration molaire en acide sulfurique de la phase aqueuse A1. Nb et Eu ne sont, quant à eux, pratiquement pas extraits de la phase aqueuse A1. Les pourcentages d'extraction E (%) et de désextraction Désex (%) du tantale ainsi que les valeurs calculées des sélectivités du Ta vis-à-vis de Nb et de Eu, notées respectivement $S_{Ta/Nb}$ et $S_{Ta/Eu}$, sont reportés dans le tableau 4.2 ci-dessous :

Tableau 4.2

| $[H_2SO_4]$ (en M) | E (%) | Désex (%) | $S_{Ta/Nb}$ | $S_{Ta/Eu}$ |
|---|---|---|---|---|
| 3 | 91.1 | 95 | 130 | 375 |
| 6 | 97.7 | 100 | 237 | 495 |
| 9 | 97.6 | 100 | 210 | 515 |

Les résultats du tableau 4.2 montrent que le liquide ionique LI1 est un extractant très sélectif du tantale, quelle que soit la concentration molaire en acide sulfurique de la phase aqueuse A1 et que le tantale peut être totalement désextrait.

**4.3** Pour déterminer l'influence de la partie azotée du cation du liquide ionique de la phase A2 sur les performances d'extraction, une troisième série d'extractions a été réalisée par mise en contact volume à volume des phases A1 et A2 suivantes :

Phase aqueuse A1 : [Ta] = 7 g/L, dans l'acide sulfurique ($[H_2SO_4]$ = 6 M)
Phase A2 : Liquide ionique : LI1, LI4 et LI5

Les valeurs calculées des coefficients de distribution du tantale $D_{Ta}$ ainsi que les pourcentages d'extraction E (%) et de désextraction Désex (%) sont reportées dans le tableau 4.3 ci-dessous :

Tableau 4.3

| Phase A2 | | | $D_{Ta}$ | E (%) | Désex (%) |
|---|---|---|---|---|---|
| LI1 | $[EPipMIBK]NTf_2$ | 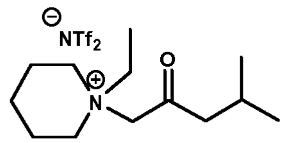 | 43,5 | 97,7 | 100 |
| LI4 | $[MIMMIBK]NTf_2$ | 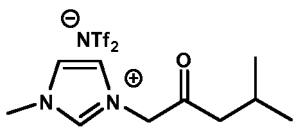 | 23,7 | 96,0 | 86 |
| LI5 | $[PyMIBK]NTf_2$ | 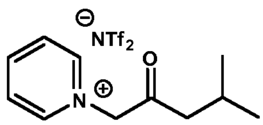 | 20,9 | 95,4 | 86 |

On observe que l'extraction est particulièrement efficace quel que soit le liquide ionique choisi parmi LI1, LI4 et LI5, les pourcentages d'extraction s'échelonnant entre 95,4% et 97,7%.

**4.4** Pour déterminer l'influence de la partie cétone du cation du liquide ionique de la phase A2 sur les performances d'extraction, une quatrième série d'extractions a été réalisée par mise en contact volume à volume des phases A1 et A2 suivantes :

Phase aqueuse A1 : [Ta] = 1 g/L ou [Ta] = 7 g/L, dans l'acide sulfurique ($[H_2SO_4]$ = 6 M)
Phase A2 : Liquide ionique : LI1, LI2, LI3, LI5, LI6 ou LI7

Les valeurs calculées des coefficients de distribution du tantale $D_{Ta}$ ainsi que les pourcentages d'extraction E (%) et de désextraction Désex (%), pour chaque concentration massique en Ta, sont reportées dans le tableau 4.4 ci-dessous :

Tableau 4.4

| Phase A2 | | | [Ta] = 1 g/L | | | [Ta] = 7 g/L | | |
|---|---|---|---|---|---|---|---|---|
| | | | $D_{Ta}$ | E (%) | Désex (%) | $D_{Ta}$ | E (%) | Désex (%) |
| LI1 | [EPipMIBK]$NTf_2$ | 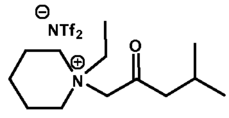 | 43,5 | 97,7 | 100 | 33 | 97,1 | 94 |
| LI2 | [EPipAcP]$NTf_2$ | 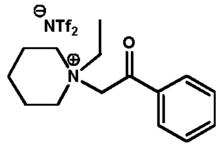 | 17,2 | 94,5 | 20 | 4,2 | 80,1 | 31 |
| LI3 | [EPipMAcP]NTf 2 | 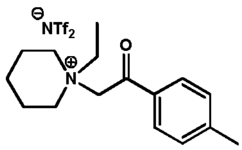 | 4,5 | 81,8 | 22 | Non réalisé | | |
| LI6 | [EPipPin]$NTf_2$ | 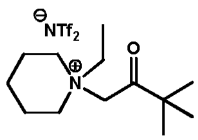 | 35,7 | 97,2 | 43 | 20,0 | 95,2 | 95 |
| LI7 | [MIMPin]$NTf_2$ | 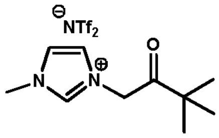 | Non réalisé | | | 23,8 | 96,0 | 87 |
| LI8 | [EPipP4K]$NTf_2$ | 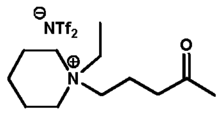 | Non réalisé | | | 24,4 | 96,1 | 88 |

Comme il ressort du tableau 4.4, lorsque la fonction cétone du liquide ionique comprend une chaine aliphatique (ici, isobutyl ou tertiobutyl), de très bons résultats d'extraction sont obtenus, les pourcentages d'extraction s'échelonnant entre 95,2% et 97,7% (liquides ioniques LI1, LI6, LI7 et LI8). Le liquide ionique LI1, qui possède un groupement méthylisobutylcétone (MIBK), reste légèrement plus performant que le liquide ionique LI6 possédant un groupement tertbutyle. Lorsque la fonction cétone du liquide ionique comprend un groupement aromatique (LI2 et LI3), les performances de l'extraction chutent et ce, en raison de la grande viscosité des liquides ioniques correspondants, viscosité qui fait obstacle à l'extraction et à la désextraction.

Le tableau 4.4 met également en évidence le fait que l'extraction diminue sensiblement lorsque la concentration en Ta augmente.

Le liquide ionique LI1 [EPipMIBK]$NTf_2$ est l'extractant le plus performant.

**4.5** Pour évaluer l'aptitude du liquide ionique LI1 [EPipMIBK]$NTf_2$ à pouvoir être réutilisé, des tests de recyclage ont été réalisés par mise en contact volume à volume des phases initiales A1 et A2 suivantes :

| | |
|---|---|
| Phase aqueuse A1 : | [Ta] = 7 g/L, dans l'acide sulfurique ([$H_2SO_4$] = 6 M) |
| Phase A2 : | Liquide ionique : LI1 |

Après un premier cycle d'extraction/désextraction (cycle 1), le liquide ionique LI1 tel qu'obtenu à l'issue de la désextraction est mis en œuvre pour un deuxième cycle d'extraction/désextraction (cycle 2) suivi d'un troisième (cycle 3). Les résultats de ces tests de recyclage sont reportés dans le tableau 4.5 ci-dessous :

Tableau 4.5

| Cycle | $D_{Ta}$ | E (%) | Désex (%) |
|---|---|---|---|
| 1 | 33,4 | 97 | 94 |
| 2 | 27,2 | 96,4 | 93 |
| 3 | 30,8 | 96,9 | 96 |

Le tableau 4.5 montre que le liquide ionique LI1 a été recyclé 3 fois sans perte d'efficacité.

**4.6** Pour déterminer les performances d'extraction du Ta d'une phase aqueuse A1 comprenant plusieurs éléments métalliques, une quatrième série d'extractions a été réalisée par mise en contact volume à volume des phases A1 et A2 suivantes :

Phase aqueuse A1 : [Ta] = [Nb] = [Fe] = [Ni] = [Mn] = [Ag] = 2 g/L, dans des concentrations variables d'acide sulfurique ($[H_2SO_4]$ = de 0,1 M à 9 M)

Phase A2 : Liquide ionique : LI1

En se reportant à la figure 3 sur laquelle sont reportées les valeurs des coefficients de distribution $D_M$ des différents métaux M (Ta, Nb, Fe, Ni, Mn et Ag) en fonction de la concentration molaire en acide sulfurique, on observe que le liquide ionique LI1 [EPipMIBK]$NTf_2$ reste très performant, même en présence d'autres éléments compétiteurs. En effet, les coefficients de distribution $D_{Ta}$ sont similaires à ceux obtenus avec une phase aqueuse A1 comprenant Ta seul (voir figure 1).

En référence à la figure 4 sur laquelle sont reportées les valeurs de sélectivité $S_{Ta/M}$ du Ta vis-à-vis de chacun des autres métaux Nb, Fe, Ni, Mn et Ag également présents dans la phase aqueuse A1 en fonction de la concentration molaire en acide sulfurique, on observe que le liquide ionique LI1 [EPipMIBK]$NTf_2$ reste très sélectif du Ta, avec des valeurs pour $S_{Ta/M}$ s'échelonnant de 30 à 1400 selon la concentration molaire en acide sulfurique et les métaux considérés.

En se reportant à la figure 5 sur laquelle sont reportées les valeurs des coefficients de distribution des différents métaux M (Ta, Nb, Fe, Ni, Mn et Ag) en fonction de la concentration molaire en acide sulfurique, après des tests de recyclage conduits selon le même protocole opératoire que celui décrit au paragraphe **4.5** ci-dessus, on observe que le liquide ionique LI1 [EPipMIBK]$NTf_2$, recyclé 3 fois, reste particulièrement performant. En effet, les coefficients de distribution $D_{Ta}$ sont comparables à ceux obtenus avec une phase aqueuse A1 comprenant Ta seul (voir figure 1) ou comprenant, en outre, Nb, Fe, Ni, Mn et Ag (voir figure 3).

En référence à la figure 6 sur laquelle sont reportées les valeurs de sélectivité $S_{Ta/M}$ du Ta vis-à-vis de chacun des autres métaux Nb, Fe, Ni, Mn et Ag, après ces mêmes tests de recyclage, on observe que le liquide ionique LI1 [EPipMIBK]$NTf_2$, recyclé 3 fois, reste très sélectif du Ta, avec des valeurs pour $S_{Ta/M}$ s'échelonnant de 40 à 1000 selon la concentration molaire en acide sulfurique et les métaux considérés.

## Exemple 5 : Extraction par des liquides ioniques non fonctionnalisés

**5.1** Une première série d'extractions a été réalisée par mise en contact volume à volume des phases A1 et A2 suivantes :

Phase aqueuse A1 : [Ta] = 7 g/L, dans l'acide sulfurique ($[H_2SO_4]$ = 6 M)

Phase A2 : Liquide ionique : LI11 ou LI12, tel que précisé dans le tableau 5 ci-dessous

Les valeurs calculées des coefficients de distribution du tantale $D_{Ta}$ ainsi que les pourcentages d'extraction E (%) et de désextraction Désex (%), après un premier puis un deuxième cycle d'extraction/désextraction, sont reportées dans le tableau 5 ci-dessous :

Tableau 5

| Phase A2 | | | Cycle 1 | | | Cycle 2 | | |
|---|---|---|---|---|---|---|---|---|
| | | | $D_{Ta}$ | E(%) | Désex (%) | $D_{Ta}$ | E(%) | Désex (%) |
| LI11 | [EBPip]$NTf_2$ | 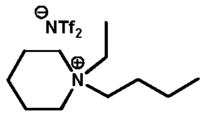 | 41,7 | 97,7 | 72 | 42,8 | 97,7 | 87 |
| LI12 | [BMIM]$NTf_2$ | 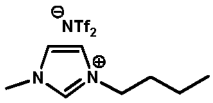 | 17,7 | 94,7 | 74 | 28,9 | 96,7 | 82 |

Ces liquides ioniques non fonctionnalisés LI11 et LI12 se montrent aussi performants que leurs homologues fonctionnalisés par un groupement cétone (voir en particulier LI8, mais également LI1, LI6 ou encore LI4, LI7), avec une légère diminution des performances de désextraction du Ta.
La tendance d'une meilleure extraction du Ta avec le noyau pipéridine (LI11) est à nouveau constatée.
**5.2** Pour déterminer les performances d'extraction du Ta d'une phase aqueuse A1 comprenant plusieurs éléments métalliques, une deuxième série d'extractions a été réalisée par mise en contact volume à volume des phases A1 et A2 suivantes :

| | |
|---|---|
| Phase aqueuse A1 : | [Ta] = [Nb] = [Fe] = [Ni] = [Mn] = [Ag] = 2 g/L, dans des concentrations variables d'acide sulfurique ([$H_2SO_4$] = de 0,1 M à 9 M) |
| Phase A2 : | Liquide ionique : LI11 |

En référence à la figure 7 sur laquelle sont reportées les valeurs des coefficients de distribution des différents métaux M (Ta, Nb, Fe, Ni, Mn et Ag) en fonction de la concentration molaire en acide sulfurique, on observe que le liquide ionique LI11 [EBPip]$NTf_2$ reste très performant, même en présence d'autres éléments. En effet, les coefficients de distribution $D_{Ta}$ sont similaires à ceux obtenus avec une phase aqueuse A1 ne comprenant que Ta (voir tableau 5).
En référence à la figure 8 sur laquelle sont reportées les valeurs de sélectivité $S_{Ta/M}$ du Ta vis-à-vis de chacun des autres métaux Nb, Fe, Ni, Mn et Ag également présents dans la phase aqueuse A1 en fonction de la concentration molaire en acide sulfurique, on observe que le liquide ionique LI11 [EBPip]$NTf_2$ reste très sélectif du Ta, avec des valeurs pour $S_{Ta/M}$ s'échelonnant de 40 à 4000 selon la concentration molaire en acide sulfurique et les métaux considérés.
Cette sélectivité de l'extraction de Ta vis-à-vis des autres métaux au moyen du liquide ionique LI11 s'observe quelle que soit la concentration molaire en acide sulfurique, comme déjà observé avec le liquide ionique LI1 ([EPipMIBK]$NTf_2$).
**5.3** Pour évaluer l'aptitude du liquide ionique LI11 [EBPip]$NTf_2$ à pouvoir être réutilisé, des tests de recyclage ont été réalisés par mise en contact volume à volume des phases initiales A1 et A2 suivantes :

| | |
|---|---|
| Phase aqueuse A1 : | [Ta] = [Nb] = [Fe] = [Ni] = [Mn] = [Ag] = 2 g/L, dans des concentrations variables d'acide sulfurique ([$H_2SO_4$] = de 0,1 M à 9 M) |
| Phase A2 : | Liquide ionique : LI11 |

Après un premier cycle d'extraction/désextraction (cycle 1), le liquide ionique LI11 tel qu'obtenu à l'issue de la désextraction est mis en œuvre pour un deuxième cycle d'extraction/désextraction (cycle 2) suivi d'un troisième (cycle 3).
Les résultats de ces tests de recyclage sont illustrés sur les figures 9 et 10 annexées.

**Exemple 6 : Extraction par un liquide ionique comprenant une fonction phosphonate**

**6.1** Une première série d'extractions a été réalisée par mise en contact volume à volume des phases A1 et A2 suivantes :

| | |
|---|---|
| Phase aqueuse A1 : | [Ta] = 7 g/L, dans l'acide sulfurique ([$H_2SO_4$] = 6 M) |
| Phase A2 : | Liquide ionique : LI10, [EPipBPhos]$NTf_2$ |

Les valeurs calculées des coefficients de distribution du tantale $D_{Ta}$ ainsi que les pourcentages d'extraction E (%)et de

désextraction Désex (%), après un premier cycle d'extraction/désextraction (cycle 1) puis un deuxième (cycle 2), sont reportées dans le tableau 6.1 ci-dessous :

Tableau 6.1

| Phase A2 | | | Cycle 1 | | | Cycle 2 | | |
|---|---|---|---|---|---|---|---|---|
| | | | $D_{Ta}$ | E (%) | Désex (%) | $D_{Ta}$ | E (%) | Désex (%) |
| LI10 | [EPipBPhos]$NTf_2$ | 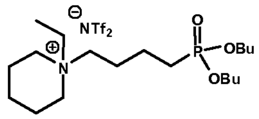 | 153 | 99,4 | 72 | 255 | 99,6 | 89 |

Les valeurs figurant dans ce tableau 6.1 mettent en évidence les propriétés particulièrement performantes de ce liquide ionique LI10 comprenant une fonction phosphonate, puisque la quasi-totalité du Ta peut être extraite de la phase aqueuse A1, les pourcentages d'extraction s'établissant à 99,4% et 99,6%. Les pourcentages de désextraction sont également élevés (72% et 89%).

**6.2** Une deuxième série d'extractions a été réalisée par mise en contact des phases A1 et A2 suivantes, dans des rapports volumiques variables entre la phase A1 et la phase A2, comme indiqué dans le tableau 6.2 ci-dessous :

Phase aqueuse A1 : [Ta] = 7 g/L, dans l'acide sulfurique ([$H_2SO_4$] = 6 M)
Phase A2 : Liquide ionique : LI10, [EPipBPhos]$NTf_2$

Les valeurs calculées des coefficients de distribution du tantale $D_{Ta}$ ainsi que les pourcentages d'extraction E (%) sont reportées dans le tableau 6.2 ci-dessous :

Tableau 6.2

| $V_{A1}/V_{A2}$ | $D_{Ta}$ | E(%) |
|---|---|---|
| 1 | 150 | 99,3 |
| 2 | 266 | 99,3 |
| 4 | 270 | 98,5 |
| 8 | 150 | 94,9 |
| 16 | 77 | 82,8 |

Les résultats du tableau 6.2 montrent que ce liquide ionique LI10 présente d'excellentes capacités à extraire le tantale. Ainsi, même dans le cas où le volume de phase aqueuse A1 est seize fois plus important que celui de phase A2, LI10 permet d'extraire jusqu'à 82,8% de Ta, la phase aqueuse A1 comprenant initialement 7 g/L de Ta.

**6.3** Pour déterminer les performances d'extraction du Ta d'une phase aqueuse A1 comprenant plusieurs éléments métalliques, une troisième série d'extractions a été réalisée par mise en contact volume à volume des phases A1 et A2 suivantes :

Phase aqueuse A1 : [Ta] = [Nb] = [Fe] = [Ni] = [Mn] = [Ag] = 2 g/L, dans des concentrations variables d'acide sulfurique ([$H_2SO_4$] = de 0,1 M à 9 M)
Phase A2 : Liquide ionique : LI10, [EPipBPhos]$NTf_2$

En référence à la figure 11, on observe que le liquide ionique LI10 [EPipBPhos]$NTf_2$ permet d'obtenir une extraction du Ta particulièrement performante à partir de la phase aqueuse A1 comprenant d'autres éléments.

En référence à la figure 12, on observe que le liquide ionique LI10 [EPipBPhos]$NTf_2$ permet d'extraire de manière très sélective le Ta. En effet, les valeurs de $S_{Ta/M}$ sont toutes supérieures à 100 et ce, quelle que soit la concentration molaire en acide sulfurique, sauf en ce qui concerne Nb, pour lequel la sélectivité $S_{Ta/Nb}$ chute à partir d'une concentration molaire en acide sulfurique de 6 M.

**6.4** Pour évaluer l'aptitude du liquide ionique LI10 [EPipBPhos]$NTf_2$ à pouvoir être réutilisé, des tests de recyclage ont été réalisés par mise en contact volume à volume des phases initiales A1 et A2 suivantes :

Phase aqueuse A1 : [Ta] = [Nb] = [Fe] = [Ni] = [Mn] = [Ag] = 2 g/L, dans des concentrations variables d'acide sulfurique ([$H_2SO_4$] = de 0,1 M à 9 M)
Phase A2 : Liquide ionique : LI10, [EPipBPhos]$NTf_2$

Après un premier cycle d'extraction/désextraction (cycle 1), le liquide ionique LI10 tel qu'obtenu à l'issue de la désextraction est mis en œuvre pour un deuxième cycle d'extraction/désextraction (cycle 2) suivi d'un troisième (cycle 3). Les résultats de ces tests de recyclage sont illustrés sur les figures 13 et 14 annexées.

**Exemple 7** : **Extraction par un mélange de deux liquides ioniques**

Une série d'extractions a été réalisée par mise en contact volume à volume des phases A1 et A2 suivantes :

Phase aqueuse A1 : [Ta] = 7 g/L, dans l'acide sulfurique ([$H_2SO_4$] = 6 M)
Phase A2 : Liquides ioniques: LI1 + LI11, [EPipMIBK]$NTf_2$ + [EBPip]$NTf_2$, dans des proportions variables précisées dans le tableau 7 ci-dessous

Les valeurs calculées des coefficients de distribution du tantale $D_{Ta}$ ainsi que les pourcentages d'extraction E (%) et de désextraction Désex (%) sont reportées dans le tableau 7 ci-dessous :

Tableau 7

| Proportion de LI1 dans LI11 (%) | $D_{Ta}$ | E (%) | Désex (%) |
|---|---|---|---|
| 1 | 38,3 | 97,5 | 75 |
| 2 | 40,2 | 97,6 | 70 |
| 10 | 40,9 | 97,6 | 68 |
| 20 | 37 | 97,4 | 75 |
| 50 | 36 | 97,3 | 75 |

D'après les résultats du tableau 7, on observe que, quel que soit le ratio de [EPipMIBK]$NTf_2$ dans [EBPip]$NTf_2$, les pourcentages d'extraction sont sensiblement les mêmes.

**Exemple 8 : Électrodéposition du tantale**

Trois essais d'électrodéposition ont été conduits à partir de la solution électrolytique formée par la phase A2 telle qu'issue de l'extraction décrite au paragraphe 5.1 ci-dessus et comprenant le tantale extrait dans le liquide ionique LI11 [EBPip]$NTf_2$.

Dans cette solution électrolytique, on a disposé une cathode, une électrode de référence et, comme électrode de travail, successivement un substrat en aluminium, un substrat en titane et un substrat en carbone.

L'électrode de référence est constituée par un fil d'argent immergé dans une solution d'$AgCF_3SO_3$ (à 10 mmol/L) dans le liquide ionique trifluorométhanesulfonate de 1-butyl-3-méthylimidazolium ($BMICF_3SO_3$).

On a ensuite appliqué une différence de potentiel entre la cathode et l'électrode de référence s'échelonnant entre -1,4 V et -2,1 V, en fonction du substrat testé.

Dans le cas particulier du substrat en aluminium, on a appliqué une différence de potentiel de -1,5 V par rapport à l'électrode de référence, la solution électrolytique étant maintenue à une température de 110 °C. Le dépôt métallique obtenu à la cathode est ensuite rincé à l'isopropanol puis à l'eau en vue de son analyse.

Ce dépôt a fait l'objet d'un cliché au moyen d'un microscope électronique à balayage (MEB) ainsi que d'une analyse au moyen d'une sonde d'analyse dispersive en énergie (en anglais, energy dispersive X-ray spectrometry et abrégé EDX) afin d'en déterminer la composition chimique.

Les résultats de ces cliché MEB et analyse EDX, respectivement présentés aux figures 15A et 15B, montrent que ce dépôt est adhérent, homogène, compact, qu'il présente une épaisseur supérieure à 10 $\mu$m et qu'il est composé de grains de plusieurs microns de diamètre. Comme le montre le spectre EDX (figure 15B), ce dépôt est principalement constitué de tantale et ne comporte pas de traces de soufre et/ou de fluor qui aurait pu provenir d'une réaction entre le tantale et le liquide ionique LI11 [EBPip]$NTf_2$.

On observe également un dépôt de tantale sous sa forme métallique dans le cas des essais conduits avec chacun des autres substrats en titane et en carbone.

## Revendications

1. Procédé d'extraction du tantale d'une phase aqueuse A1 acide comprenant au moins une étape comprenant la mise en contact de la phase aqueuse A1 avec une phase A2 non miscible à l'eau, puis la séparation de la phase aqueuse A1 de la phase A2, **caractérisé en ce que** la phase A2 est constituée par un liquide ionique ou un mélange de liquides ioniques, de préférence par un liquide ionique, en tant qu'extractant.

2. Procédé d'extraction selon la revendication 1, dans lequel le ou les liquides ioniques comprennent un cation organique et un anion, ledit cation organique comprenant un groupement azoté choisi dans le groupe constitué par un ammonium quaternaire, cyclique ou non cyclique, un phosphonium, un pipéridinium, un pyridinium, un pyrrolidinium, un pipérazinium et un imidazolium, avantageusement constitué par un pipéridinium, un pyridinium, un pyrrolidinium, un pipérazinium et un imidazolium et, de préférence, constitué par un dialkylpipéridinium, un alkylpyridinium, un *N,N'*-dialkylpipérazinium et un *N,N'*-dialkylimidazolium.

3. Procédé d'extraction selon la revendication 2, dans lequel le cation organique comprend, en outre, au moins un groupement fonctionnel choisi parmi une cétone, un alcool, un phosphonate et un oxyde de phosphine, de préférence un phosphonate.

4. Procédé d'extraction selon la revendication 2 ou 3, dans lequel l'anion est choisi parmi le *bis*-(trifluorométhanesulfonyl)imide, l'hexafluorophosphate et le bis(fluorosulfonyl)imide et est, avantageusement, le *bis*-(trifluorométhanesulfonyl)imide.

5. Procédé d'extraction selon la revendication 4, dans lequel le liquide ionique est choisi parmi :

   - le *bis*-(trifluorométhanesulfonyl)imide de *N*-éthyl-*N*-(4-méthyl-2-oxopentyl)pipéridinium,
   - le *bis*-(trifluorométhanesulfonyl)imide de *N*-méthyl-*N*-(4-méthyl-2-oxopentyl)imidazolium,
   - le *bis*-(trifluorométhanesulfonyl)imide de *N*-(4-méthyl-2-oxopentyl)pyridinium,
   - le *bis*-(trifluorométhanesulfonyl)imide de (4-(dibutoxyphosphoryl)-butyl)éthylpipéridinium,
   - le *bis*-(trifluorométhanesulfonyl)imide d'éthylbutylpipéridinium, et
   - le *bis*-(trifluorométhanesulfonyl)imide de méthylimidazolium.

6. Procédé d'extraction selon l'une quelconque des revendications 1 à 5, qui est mis en œuvre à température ambiante.

7. Procédé de récupération du tantale présent dans une phase aqueuse A1 acide, **caractérisé en ce qu'**il comprend :

   (a) l'extraction du tantale de la phase aqueuse A1 par un procédé d'extraction selon l'une quelconque des revendications 1 à 6 ; et
   (b) la désextraction dudit tantale présent dans la phase A2 telle qu'obtenue à l'issue de l'étape (a), ou
   (b') l'électrodéposition dudit tantale présent dans la phase A2 telle qu'obtenue à l'issue de l'étape (a).

8. Procédé de récupération selon la revendication 7, dans lequel l'étape (b) de désextraction comprend la mise en contact de cette phase A2 avec une phase aqueuse A3 dont le pH est inférieur ou égal à 7, puis la séparation de la phase A2 de la phase aqueuse A3.

9. Procédé de récupération selon la revendication 7, dans lequel l'étape (b') d'électrodéposition comprend l'application d'une différence de potentiel entre une cathode et une électrode de référence, en présence d'une électrode de travail, l'ensemble de ces électrodes étant disposé dans cette phase A2, entre - 0,8 V et - 2,4 V.

10. Procédé d'extraction selon l'une quelconque des revendications 1 à 6 ou procédé de récupération selon l'une quelconque des revendications 7 à 9, **caractérisé en ce que** la phase aqueuse A1 est une solution d'attaque acide d'un concentré d'un minerai naturel ou urbain comprenant ledit tantale.

11. Procédé d'extraction ou de récupération selon la revendication 10, dans lequel la phase aqueuse A1 comprend au moins un acide inorganique choisi dans le groupe constitué par l'acide fluorhydrique, l'acide sulfurique, l'acide

nitrique, l'acide phosphorique et l'acide chlorhydrique, la concentration molaire totale en acide(s) inorganique(s) de la phase aqueuse A1 pouvant être d'au moins 0,1 mol/L, avantageusement de 1 mol/L à 14 mol/L et, préférentiellement, de 3 mol/L à 9 mol/L.

**12.** Utilisation d'un liquide ionique ou d'un mélange de liquides ioniques en tant qu'extractant, pour extraire le tantale d'une phase aqueuse A1 acide, ledit ou lesdits liquides ioniques comprenant un cation organique et un anion, ledit cation organique comprenant un groupement azoté choisi dans le groupe constitué par un pipéridinium, un pyridinium, un pyrrolidinium, un pipérazinium et un imidazolium, de préférence constitué par un dialkylpipéridinium, un alkylpyridinium, un *N,N'*-dialkylpipérazinium et un *N,N*-dialkylimidazolium.

**13.** Utilisation selon la revendication 12, dans laquelle le cation organique comprend, en outre, au moins un groupement fonctionnel choisi parmi une cétone, un alcool, un phosphonate et un oxyde de phosphine.

**14.** Utilisation selon la revendication 12 ou 13, dans laquelle l'anion est le *bis*-(trifluorométhanesulfonyl)imide.

**15.** Utilisation selon l'une quelconque des revendications 12 à 14, dans laquelle l'extraction est réalisée par la technique d'extraction liquide-liquide.

**Patentansprüche**

**1.** Verfahren zur Extraktion von Tantal aus einer sauren wässrigen Phase A1, umfassend wenigstens einen Schritt, der das Inkontaktbringen der wässrigen Phase A1 mit einer Phase A2 umfasst, die nicht mit Wasser mischbar ist, dann die Separation der wässrigen Phase A1 von der Phase A2, **dadurch gekennzeichnet, dass** die Phase A2 durch eine ionische Flüssigkeit oder eine Mischung von ionischen Flüssigkeiten gebildet ist, vorzugsweise durch eine ionische Flüssigkeit, als Extraktionsmittel.

**2.** Verfahren zur Extraktion nach Anspruch 1, bei dem die ionische(n) Flüssigkeit(en) ein organisches Kation und ein Anion umfassen, wobei das organische Kation eine Stickstoffgruppe umfasst, ausgewählt aus der Gruppe gebildet durch ein zyklisches oder nichtzyklisches quaternäres Ammonium, ein Phosphonium, ein Piperidinium, ein Pyridinium, ein Pyrrolidinium, ein Piperazinium und ein Imidazolium, vorzugsweise gebildet durch ein Piperidinium, ein Pyridinium, ein Pyrrolidinium, ein Piperazinium und ein Imidazolium, und vorzugsweise gebildet durch ein Dialkylpiperidinium, ein Alkylpyridinium, ein *N,N'*-Dialkylpiperazinium und ein *N,N'*-Dialkylimidazolium.

**3.** Verfahren zur Extraktion nach Anspruch 2, bei dem das organische Kation ferner wenigstens eine funktionale Gruppe umfasst, ausgewählt aus einem Keton, einem Alkohol, einem Phosphonat und einem Phospinoxid, vorzugweise ein Phosphonat.

**4.** Verfahren zur Extraktion nach Anspruch 2 oder 3, bei dem das Anion ausgewählt ist aus *Bis*-(Trifluormethansulfonyl)imid, Hexafluorphosphat und Bis(fluorsulfonyl)imid und vorzugsweise das *Bis*-(Trifluormethansulfonyl)imid ist.

**5.** Verfahren zur Extraktion nach Anspruch 4, bei dem die ionische Flüssigkeit ausgewählt ist aus:

- *Bis*-(Trifluormethansulfonyl)imid von *N*-Ethyl-*N*-(4-Methyl-2-Oxopentyl) piperidinium,
- *Bis*-(Trifluormethansulfonyl)imid von *N*-Methyl-*N*-(4-Methyl-2-Oxopentyl)imidazolium,
- *Bis*-(Trifluormethansulfonyl)imid von *N*-(4-Methyl-2-Oxopentyl)pyridinium,
- *Bis*-(Trifluormethansulfonyl)imid von (4-(Dibutoxyphosphoryl)-Butyl)ethylpiperidinium,
- *Bis*-(Trifluormethansulfonyl)imid von Ethylbutylpiperidinium, und
- *Bis*-(Trifluormethansulfonyl)imid von Methylimidazolium.

**6.** Verfahren zur Extraktion nach einem der Ansprüche 1 bis 5, das bei Umgebungstemperatur durchgeführt wird.

**7.** Verfahren zur Wiedergewinnung von Tantal, das in einer sauren wässrigen Phase A1 vorhanden ist, **dadurch gekennzeichnet, dass** es umfasst:

(a) die Extraktion von Tantal aus der wässrigen Phase A1 mittels eines Verfahrens zur Extraktion nach einem der Ansprüche 1 bis 6; und
(b) die Desextraktion des Tantals, das in der Phase A2 vorhanden ist, wie sie am Ende des Schritts (a) erhalten

wird, oder
(b') die Elektrodeposition des Tantals, das in der Phase A2 vorhanden ist, wie sie am Ende des Schritts (a) erhalten wird.

**8.** Verfahren zur Wiedergewinnung nach Anspruch 7, bei dem der Schritt (b) der Desextraktion das Inkontaktbringen dieser Phase A2 mit einer wässrigen Phase A3 umfasst, deren pH kleiner oder gleich 7 ist, und dann die Separation der Phase A2 von der wässrigen Phase A3.

**9.** Verfahren zur Wiedergewinnung nach Anspruch 7, bei dem der Schritt (b') der Elektrodeposition das Anlegen einer Potentialdifferenz zwischen einer Katode und einer Referenzelektrode in Anwesenheit einer Arbeitselektrode umfasst, wobei die Gesamtheit dieser Elektroden in dieser Phase A2 angeordnet ist, zwischen -0,8 V und -2,4 V.

**10.** Verfahren zur Extraktion nach einem der Ansprüche 1 bis 6 oder Verfahren zur Wiedergewinnung nach einem der Ansprüche 7 bis 9, **dadurch gekennzeichnet, dass** die wässrige Phase A1 eine saure Ätzlösung eines Konzentrats eines natürlichen oder urbanen Minerals ist, das das Tantal enthält.

**11.** Verfahren zur Extraktion oder zur Wiedergewinnung nach Anspruch 10, bei dem die wässrige Phase A1 wenigstens eine anorganische Säure umfasst, ausgewählt aus der Gruppe gebildet durch die Flusssäure, die Schwefelsäure, die Salpetersäure, die Phosphorsäure und die Salzsäure, wobei die gesamte molare Konzentration an anorganischer/anorganischen Säure(n) der wässrigen Phase A1 wenigstens 0,1 mol/L sein kann, vorzugsweise von 1 mol/L bis 14 mol/L und bevorzugt von 3 mol/L bis 9 mol/L.

**12.** Verwendung einer ionischen Flüssigkeit oder einer Mischung von ionischen Flüssigkeiten als Extraktionsmittel zum Extrahieren des Tantals aus einer sauren wässrigen Phase A1, wobei die ionische(n) Flüssigkeit(en) ein organisches Kation und ein Anion umfasst, wobei das organische Kation eine Stickstoffgruppe umfasst, die ausgewählt ist aus der Gruppe gebildet durch ein Piperidinium, ein Pyridinium, ein Pyrrolidinium, ein Piperazinium und ein Imidazolium, vorzugsweise gebildet durch ein Dialkylpiperidinium, ein Alkylpyridinium, ein *N,N'*-Dialkylpiperazinium und ein *N,N'*-Dialkylimidazolium.

**13.** Verwendung nach Anspruch 12, bei der das organische Kation ferner wenigstens eine funktionale Gruppe umfasst, ausgewählt aus einem Keton, einem Alkohol, einem Phosphonat und einen Phosphinoxid.

**14.** Verwendung nach Anspruch 12 oder 13, bei der das Anion das *Bis*-(Trifluormethansulfonyl)imid ist.

**15.** Verwendung nach einem der Ansprüche 12 bis 14, bei der die Extraktion mittels der Flüssig-Flüssig-Extraktionstechnik durchgeführt wird.

## Claims

**1.** Method for extracting the tantalum from an acid aqueous phase A1 comprising at least one step comprising the bringing of the aqueous phase A1 into contact with a phase A2 that is not miscible with water, and then the separation of the aqueous phase A1 from the phase A2, **characterised in that** the phase A2 consists of one ionic liquid or a mixture of ionic liquids, preferably a ionic liquid, as an extractant.

**2.** Extraction method according to claim 1, wherein the ionic liquid or the ionic liquids comprise an organic cation and an anion, said organic cation comprises a nitrogen group chosen from the group consisting of a quaternary ammonium, which is cyclical or non-cyclical, a phosphonium, a piperidinium, a pyridinium, a pyrrolidinium, a piperazinium and an imidazolium, advantageously consisting of a piperidinium, a pyridinium, a pyrrolidinium, a piperazinium and an imidazolium and, preferably, consisting of a dialkylpiperidinium, an alkylpyridinium, an *N,N'*-dialkylpiperazinium and an *N,N'*-dialkylimidazolium.

**3.** Extraction method according to claim 2, wherein the organic cation further comprises at least one functional group chosen from a ketone, an alcohol, a phosphonate and a phosphine oxide, preferably a phosphonate.

**4.** Extraction method according to claim 2 or 3, wherein the anion is chosen from *bis*-(trifluoromethanesulfonyl)imide, hexafluorophosphate and *bis*-(fluorosulfonyl)imide and is advantageously *bis*-(trifluoromethanesulfonyl)imide.

**5.** Extraction method according to claim 4, wherein the ionic liquid is chosen from:

- *N*-ethyl-*N*-(4-methyl-2-oxopentyl)-piperidinium *bis*-(trifluoromethanesulfonyl)imide,
- *N*-methyl-*N*-(4-methyl-2-oxopentyl)imidazolium *bis*-(trifluoromethanesulfonyl)imide,
- *N*-(4-methyl-2-oxopentyl)pyridinium *bis*-(trifluoromethanesulfonyl)imide,
- (4-(dibutoxyphosphoryl)-butyl)ethylpiperidinium *bis*-(trifluoromethanesulfonyl)imide,
- ethylbutylpiperidinium *bis*-(trifluoromethanesulfonyl)imide, and
- methylimidazolium *bis*-(trifluoromethanesulfonyl)imide.

**6.** Extraction method according to any one of claims 1 to 5, carried out at ambient temperature.

**7.** Method for recovering the tantalum present in an acid aqueous phase A1, **characterised in that** it comprises:

(a) the extraction of the tantalum from the aqueous phase A1 by an extraction method according to any one of claims 1 to 6; and
(b) the stripping of said tantalum present in the phase A2 as obtained after step (a), or
(b') the electrodeposition of said tantalum present in the phase A2 as obtained after step (a).

**8.** Recovery method according to claim 7, wherein the step (b) of stripping comprises the bringing of this phase A2 into contact with an aqueous phase A3 having a pH that is less than or equal to 7, and then the separation of the phase A2 from the aqueous phase A3.

**9.** Recovery method according to claim 7, wherein the step (b') of electrodeposition involves applying a difference in potential between a cathode and a reference electrode, in the presence of a working electrode, all of these electrodes being placed in this phase A2, between -0.8 V and -2.4 V.

**10.** Extraction method according to any one of claims 1 to 6 or recovery method according to any one of claims 7 to 9, **characterised in that** the aqueous phase A1 is an acid digestion solution of a concentrate of a natural or urban ore comprising said tantalum.

**11.** Extraction or recovery method according to claim 10, wherein the aqueous phase A1 comprises at least one inorganic acid chosen from the group consisting of hydrofluoric acid, sulphuric acid, nitric acid, phosphoric acid and hydrochloric acid, the total molar concentration of inorganic acid(s) of the aqueous phase A1 possibly being of at least 0,1 mol/L, advantageously from 1 mol/L to 14 mol/L and, preferably, from 3 mol/L to 9 mol/L.

**12.** Use of one ionic liquid or of a mixture of ionic liquids as an extractant, in order to extract the tantalum from an acid aqueous phase A1, said ionic liquid(s) comprising an organic cation and an anion, said organic cation comprising a nitrogen group chosen from the group consisting of a piperidinium, a pyridinium, a pyrrolidinium, a piperazinium and an imidazolium, preferably consisting of a dialkylpiperidinium, an alkylpyridinium, an *N,N'*-dialkylpiperazinium and an *N,N'*-dialkylimidazolium.

**13.** Use according to claim 12, wherein the organic cation further comprises at least one functional group chosen from a ketone, an alcohol, a phosphonate and a phosphine oxide.

**14.** Use according to claim 12 or 13, wherein the anion is *bis*-(trifluoromethanesulfonyl)imide.

**15.** Use according to any one of claims 12 to 14, wherein the extraction is carried out via the technique of liquid-liquid extraction.

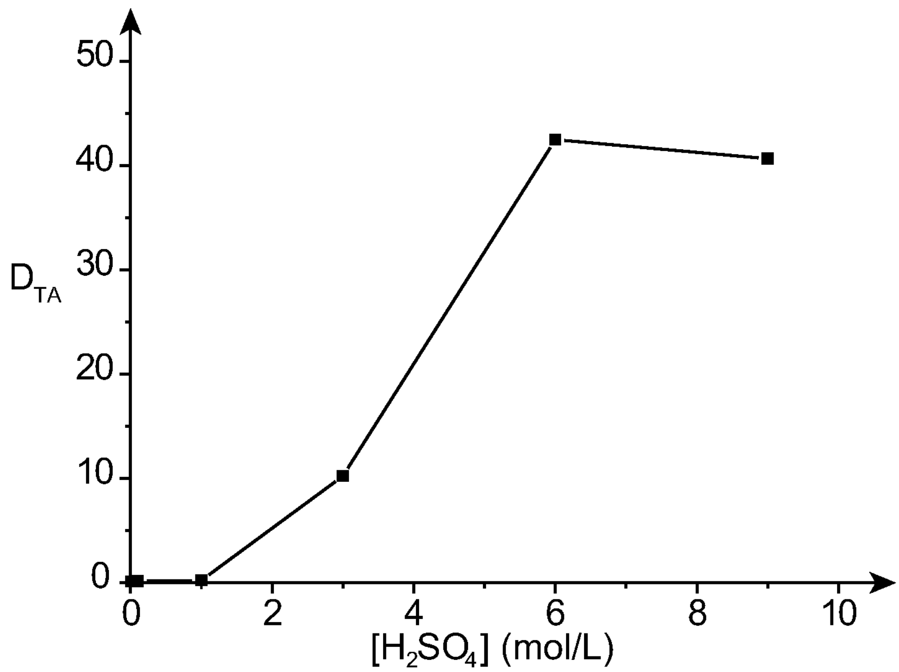
50
40
30
20
10
0
$D_{TA}$
0
2
4
6
8
10
$[H_2SO_4]$ (mol/L)

FIG. 1

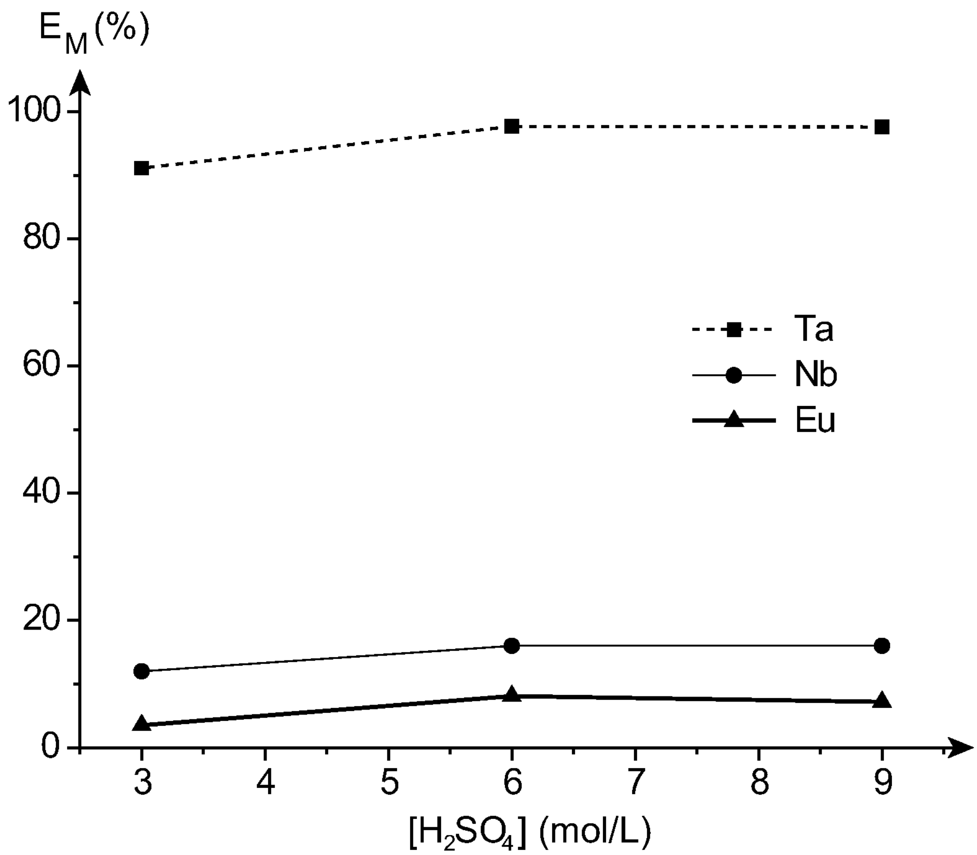
$E_M$ (%)
100
80
60
40
20
0
Ta
Nb
Eu
3
4
5
6
7
8
9
$[H_2SO_4]$ (mol/L)

FIG. 2

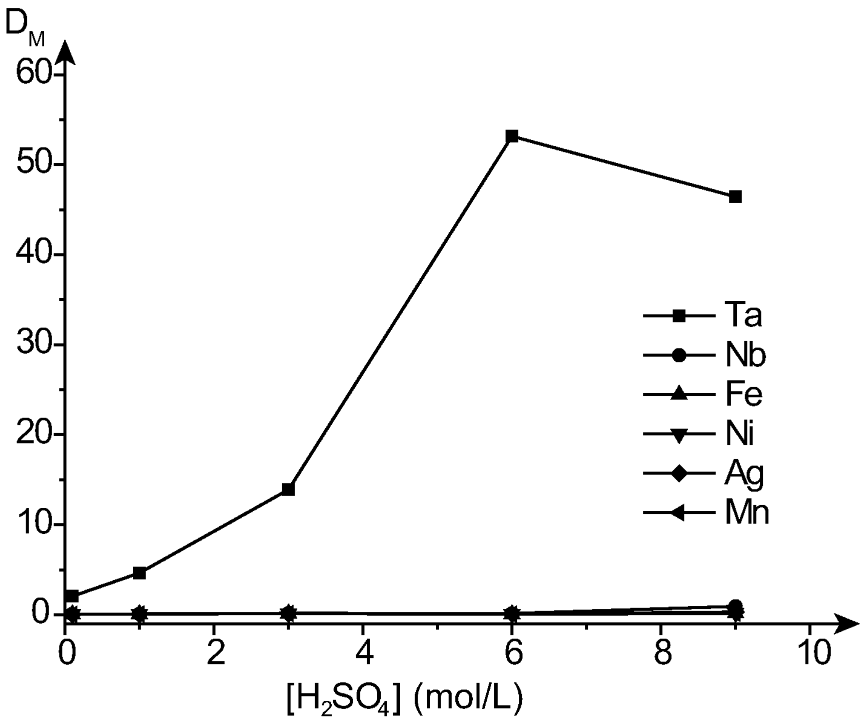

$D_M$
60
50
40
30
20
10
0
0
2
4
6
8
10
Ta
Nb
Fe
Ni
Ag
Mn
$[H_2SO_4]$ (mol/L)


FIG. 3

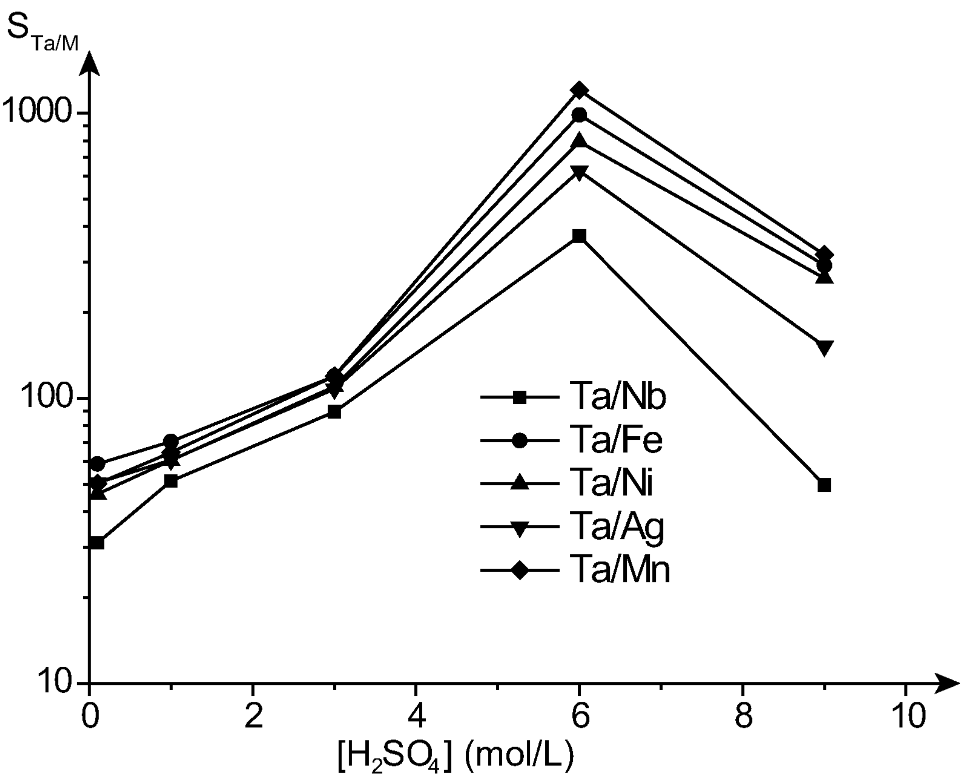

$S_{Ta/M}$
1000
100
10
0
2
4
6
8
10
Ta/Nb
Ta/Fe
Ta/Ni
Ta/Ag
Ta/Mn
$[H_2SO_4]$ (mol/L)


FIG. 4

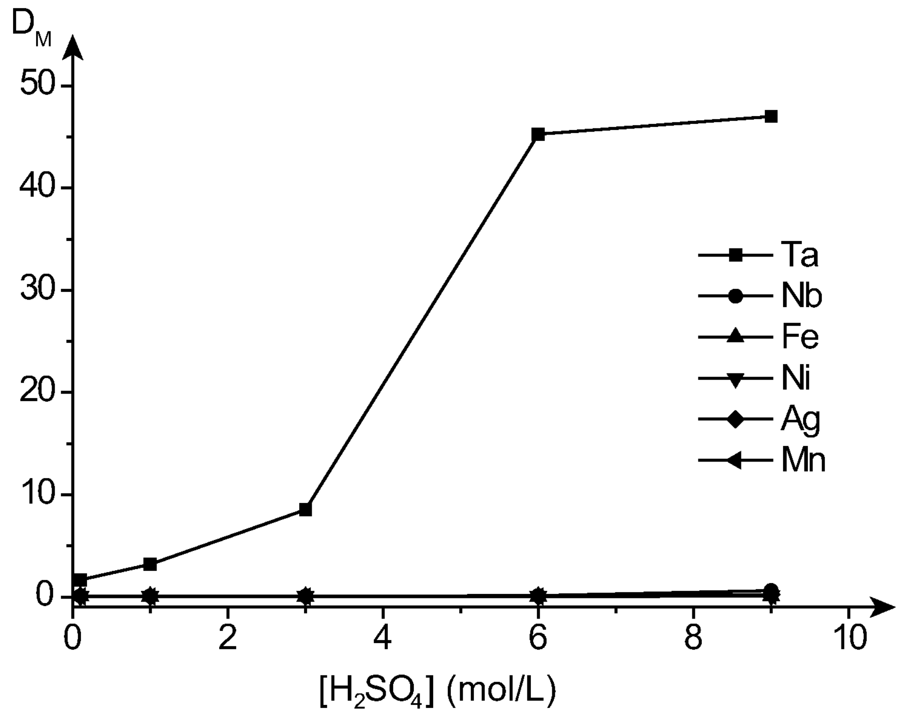
D_M
50
40
30
20
10
0
0
2
4
6
8
10
[H2SO4] (mol/L)
Ta
Nb
Fe
Ni
Ag
Mn

FIG. 5

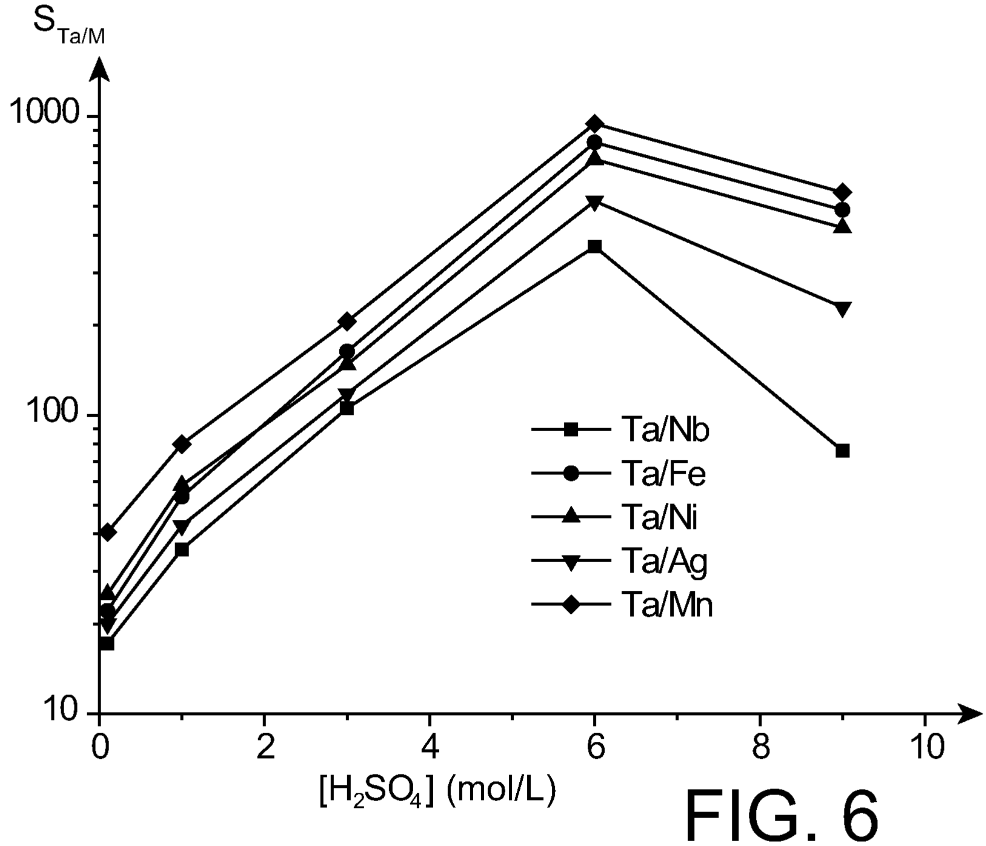
S_Ta/M
1000
100
10
0
2
4
6
8
10
[H2SO4] (mol/L)
Ta/Nb
Ta/Fe
Ta/Ni
Ta/Ag
Ta/Mn

FIG. 6

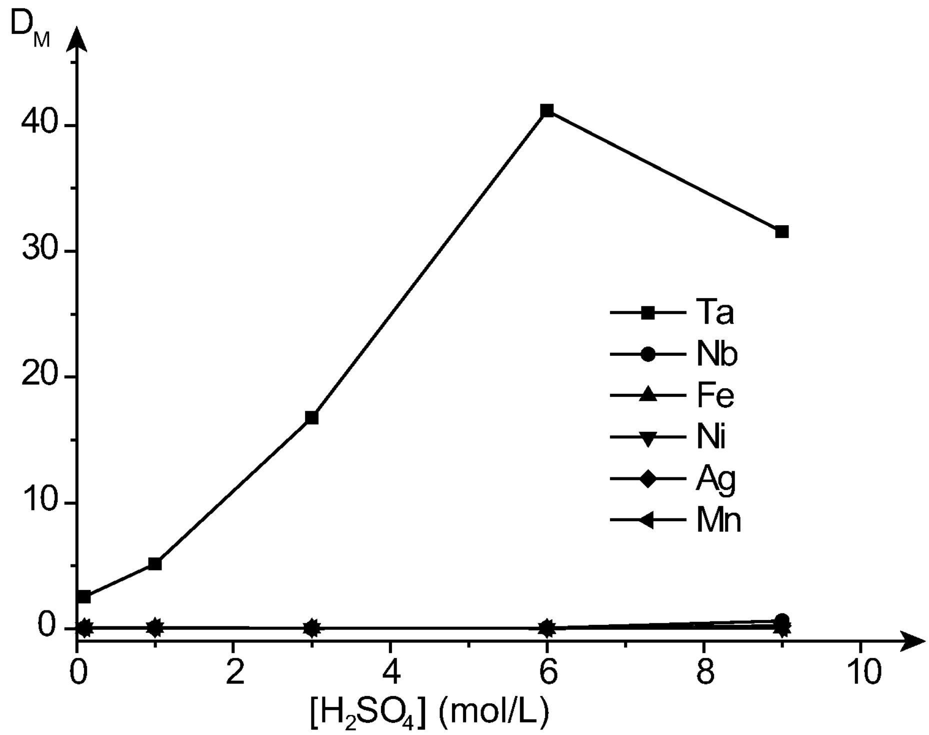
D_M
40
30
20
10
0
0
2
4
6
8
10
[H2SO4] (mol/L)
Ta
Nb
Fe
Ni
Ag
Mn

FIG. 7

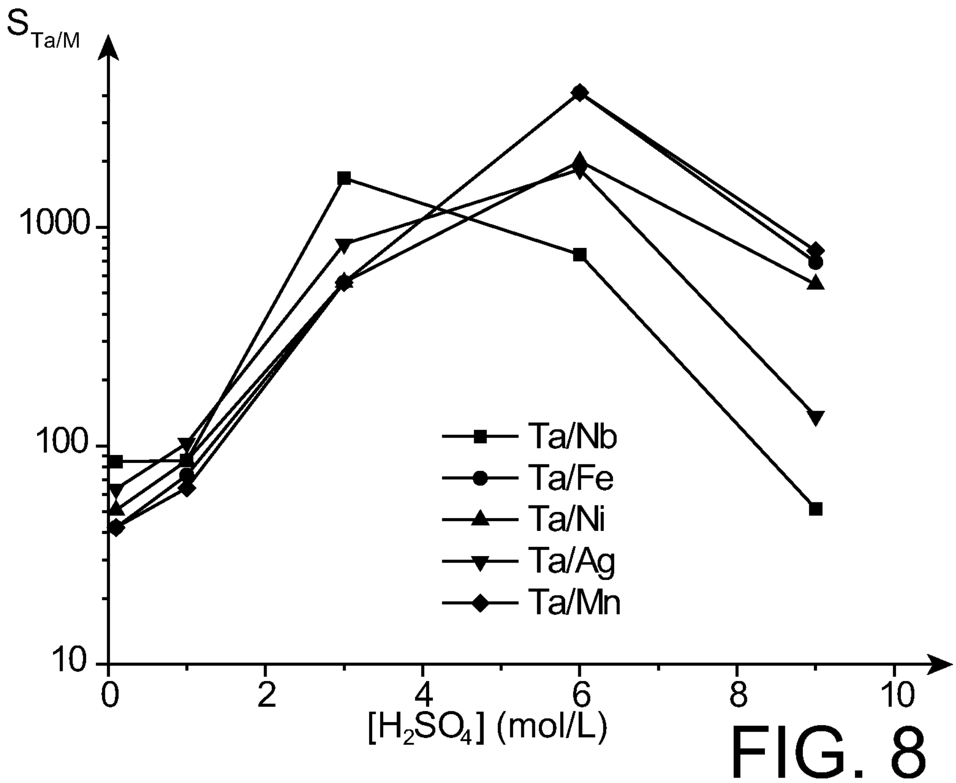
S_Ta/M
1000
100
10
0
2
4
6
8
10
[H2SO4] (mol/L)
Ta/Nb
Ta/Fe
Ta/Ni
Ta/Ag
Ta/Mn

FIG. 8

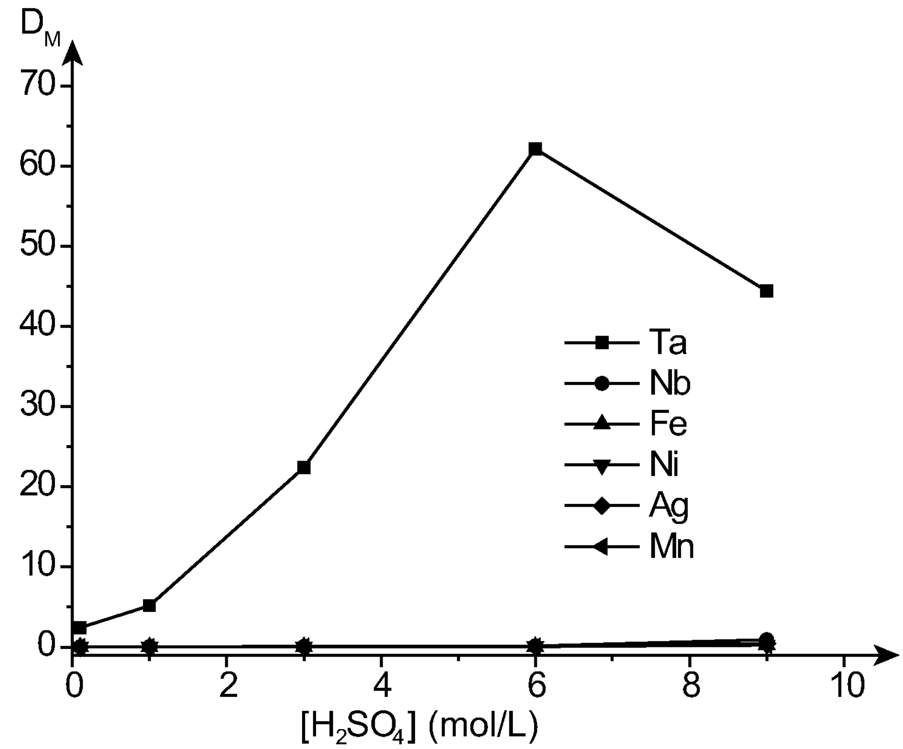

$D_M$
70
60
50
40
30
20
10
0
0
2
4
6
8
10
$[H_2SO_4]$ (mol/L)
Ta
Nb
Fe
Ni
Ag
Mn


FIG. 9

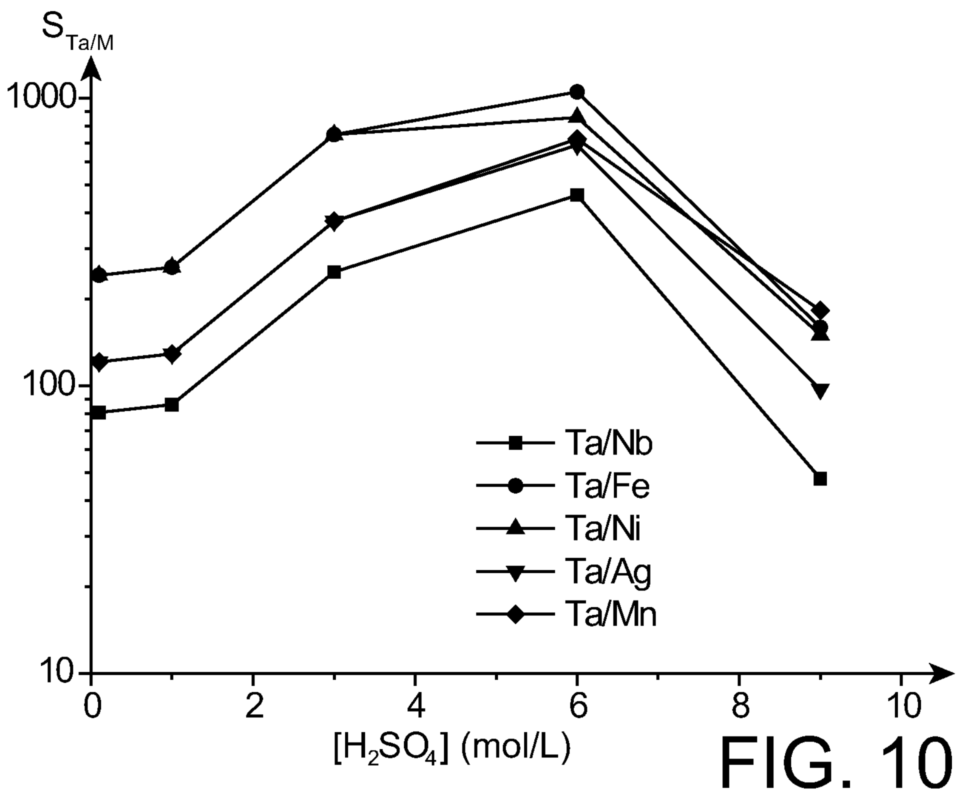

$S_{Ta/M}$
1000
100
10
0
2
4
6
8
10
$[H_2SO_4]$ (mol/L)
Ta/Nb
Ta/Fe
Ta/Ni
Ta/Ag
Ta/Mn


FIG. 10

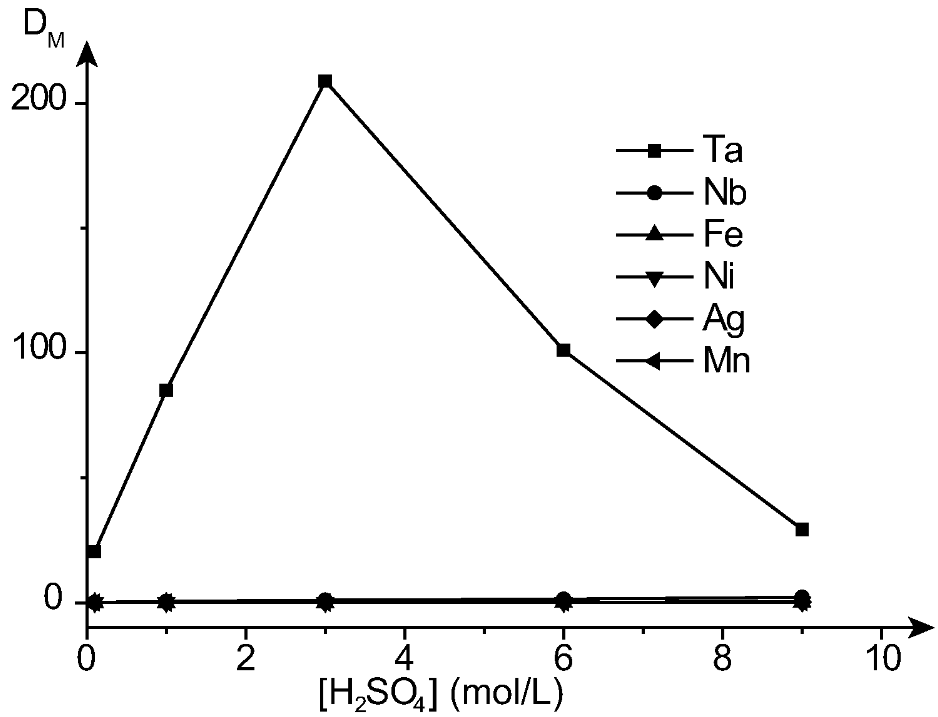

$D_M$
200
100
0
0
2
4
6
8
10
$[H_2SO_4]$ (mol/L)
Ta
Nb
Fe
Ni
Ag
Mn


FIG. 11

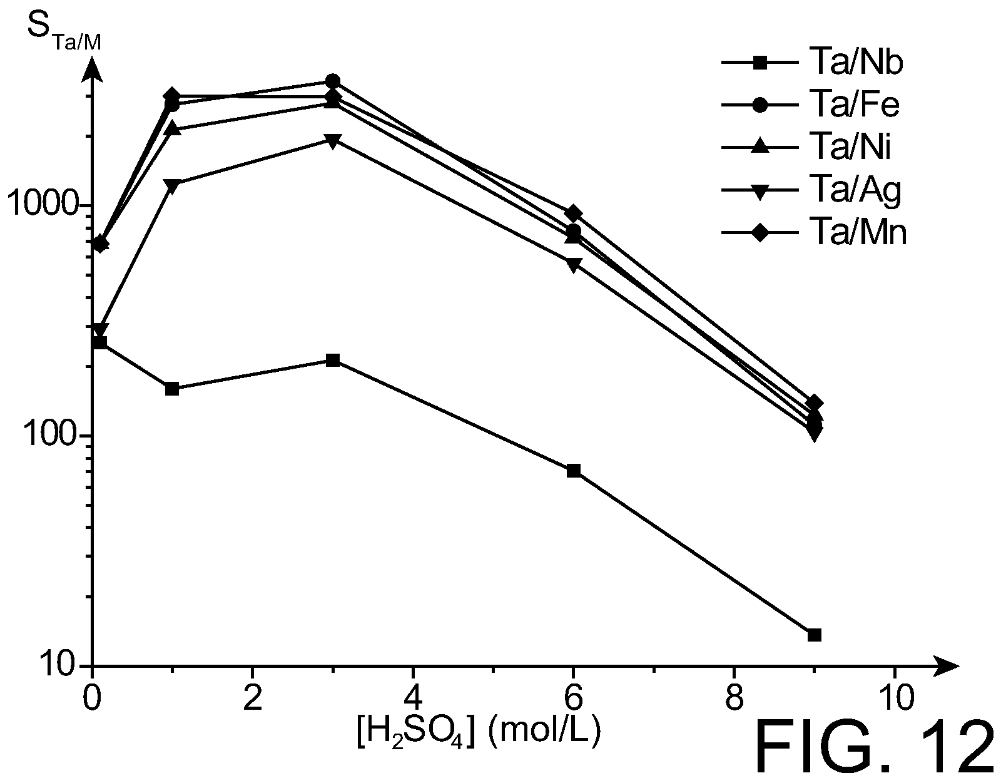

$S_{Ta/M}$
1000
100
10
0
2
4
6
8
10
$[H_2SO_4]$ (mol/L)
Ta/Nb
Ta/Fe
Ta/Ni
Ta/Ag
Ta/Mn


FIG. 12

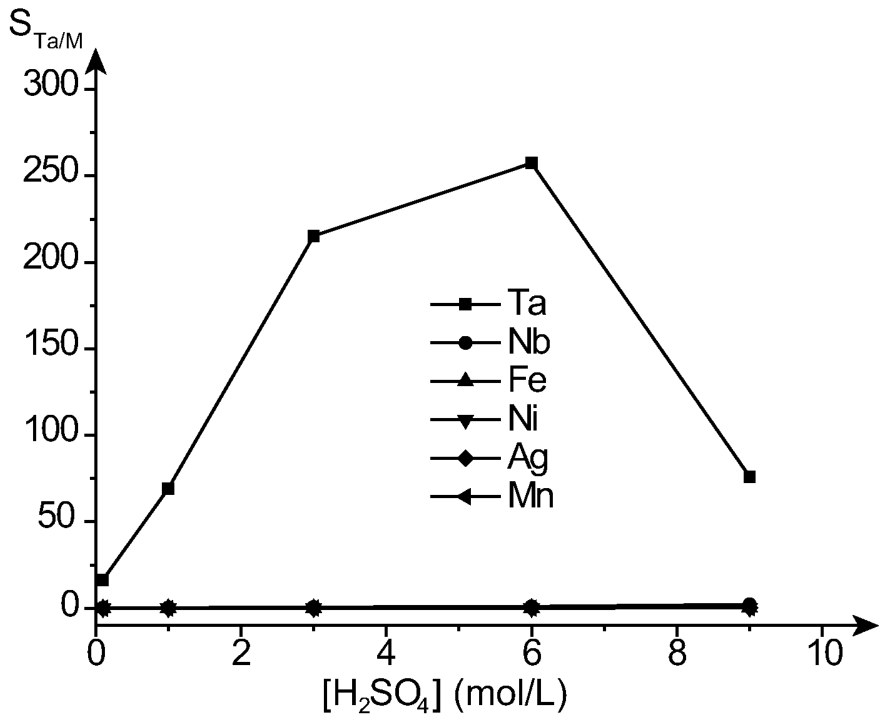
S_Ta/M
300
250
200
150
100
50
0
0
2
4
6
8
10
[H2SO4] (mol/L)
Ta
Nb
Fe
Ni
Ag
Mn

FIG. 13

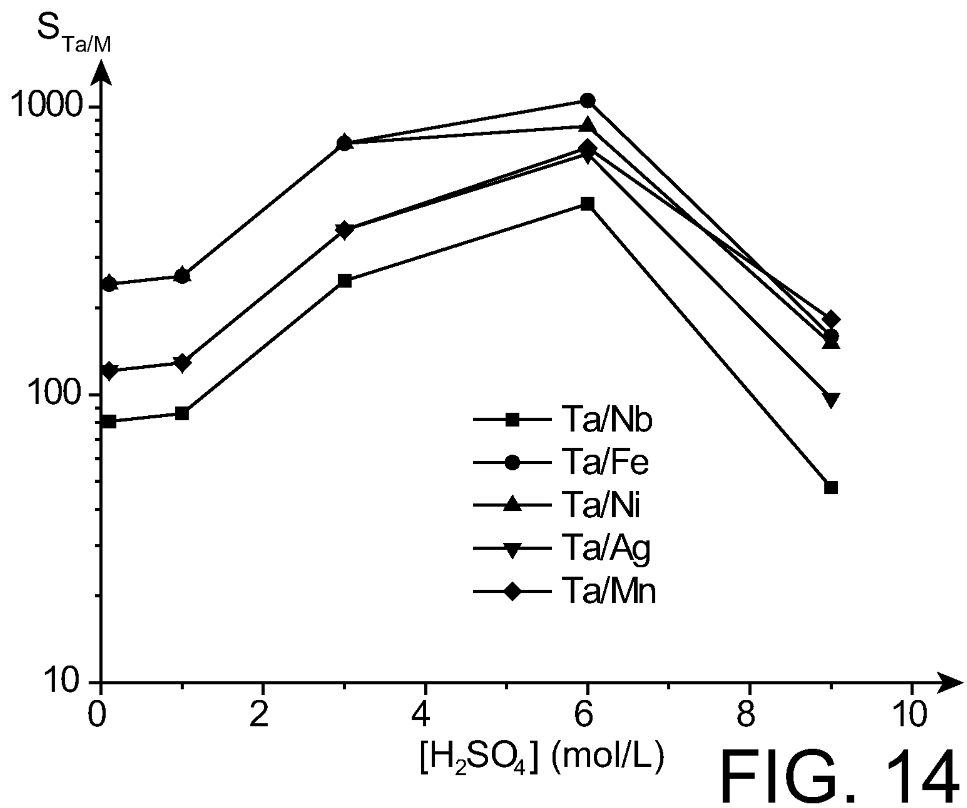
S_Ta/M
1000
100
10
0
2
4
6
8
10
[H2SO4] (mol/L)
Ta/Nb
Ta/Fe
Ta/Ni
Ta/Ag
Ta/Mn

FIG. 14

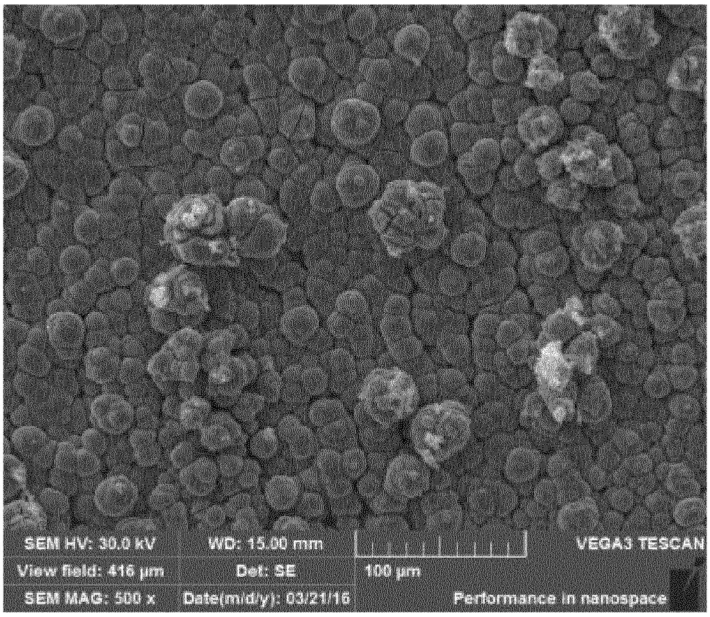


FIG. 15A

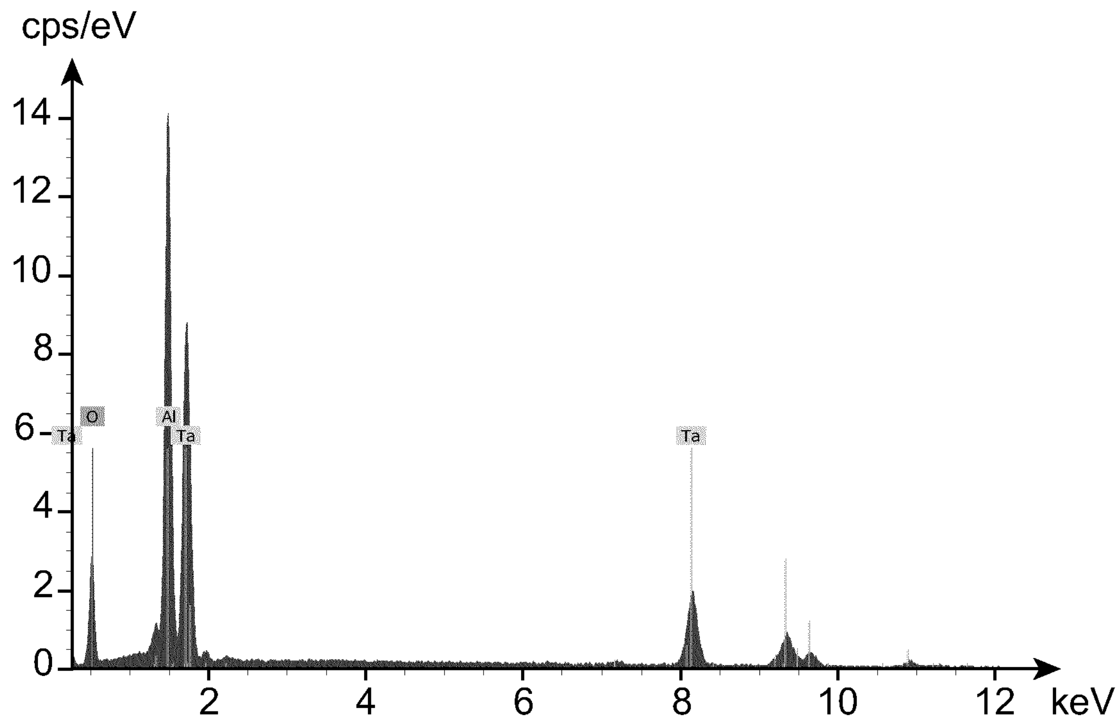


FIG. 15B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2004213716 A1